# EUROPEAN PATENT APPLICATION

(11) **EP 4 770 080 A1**
(43) Date of publication of application: **01.07.2026**
(21) Application number: 25736307.7
(22) Date of filing: 03.01.2025
(51) Int. Cl.: H04N 9/31, G03B 21/56, G06F 3/01, G03B 21/20, G08B 21/18

(54) **ELECTRONIC APPARATUS AND CONTROL METHOD THEREOF**

(30) Priority: 05.01.2024 KR 20240002332; 25.06.2024 KR 20240082971
(71) Applicant: Samsung Electronics Co., Ltd., Suwon-si, Gyeonggi-do 16677 (KR)
(72) Inventor: JUNG, Yunsung, Suwon-si, Gyeonggi-do 16677 (KR); KIM, Jinoh, Suwon-si, Gyeonggi-do 16677 (KR); MA, Jiyeon, Suwon-si, Gyeonggi-do 16677 (KR); JUNG, Dosung, Suwon-si, Gyeonggi-do 16677 (KR)
(74) Representative: Appleyard Lees IP LLP
(86) International application number: PCT/KR2025/000157
(87) International publication number: WO 2025/147153

(57) **Abstract**

An electronic device, and a controlling method thereof, the electronic device including a communicator; a camera; a projection part; and a processor configured to receive, through the communicator, state information indicating an operation state of an external device, obtain, from a memory, related information of the external device, based on an image of the external device obtained through the camera, identify at least one area from among an area on a surface of the external device and an area around the external device, based on the obtained related information of the external device, identify a projection area on which to project a screen related to the received state information among the at least one area, and control the projection part to project the screen on the identified projection area.

## Description

### [BACKGROUND OF THE INVENTION]

### [Field of the Invention]

The disclosure relates to an electronic device and a controlling method thereof, and more particularly, to an electronic device that can project an image without restriction on a location, and a controlling method thereof.

### [Description of the Related Art]

Recently, development of technologies regarding an electronic device that can project an image, i.e., a so-called projector, is going on, and in particular, a movable projector is recently gaining attention.

A movable projector can project an image without restriction on a location as it can freely move its location. However, as a movable projector can project an image without restriction on a location, when and in which projection area an image will be projected by which method should be an important matter.

Meanwhile, as a movable projector can project an image without restriction on a location, it may project an image including information on home appliances on the surfaces of other devices within the space wherein the movable projector is located, e.g., home appliances arranged in a home, or in the surroundings of the home appliances. However, as there are various types of information on home appliances, and there are also various types of home appliances, it is necessary to consider types of information on home appliances and types of home appliances when projecting an image including information on the home appliances.

For example, projecting information on home appliances on the surfaces of the home appliances or in the surroundings of the home appliances even though the home appliances include displays may not be appropriate. In contrast, in case home appliances include displays, but the sizes of the displays and the types of information that they can display are restrictive, it may be preferable to project information on the home appliances on the surfaces of the home appliances or in the surroundings of the home appliances. In addition, depending on the type of information on home appliances which become subjects for projection, determination on appropriateness regarding when and in which projection area an image will be projected by which method may also vary.

Meanwhile, various other devices may exist within a space wherein a movable projector is located, and also, there may be one or more users, and thus existence of the users and interactions between the various devices within the space wherein the movable projector is located and the users should also be matters to be considered related to projection of an image.

In spite of development of technologies regarding a movable projector, the conventional technologies are not giving sufficient consideration to the aforementioned problems, and accordingly, limitation is pointed out regarding the conventional technologies, which is that they cannot provide images and information that suit a user's intention and intuition by an effective method.

### [Detailed Description of the Invention]

### [Technical Solution]

The disclosure is for overcoming the aforementioned limitation of the conventional technologies, and the purpose of the disclosure is in providing an electronic device that can project an image without restriction on a location, and at the same time, provide information that suits a user's intention and intuition by an effective and efficient method, and a controlling method thereof.

Aspects of embodiments of the disclosure will be set forth in part in the description which follows and, in part, will be apparent from the description, or may be learned by practice of the presented embodiments.

According to an embodiment of the disclosure, an electronic device includes a communicator; a camera; a projection part; and a processor configured to receive, through the communicator, state information indicating an operation state of an external device, obtain, from a memory, related information of the external device, based on an image of the external device obtained through the camera, identify at least one area from among an area on a surface of the external device and an area around the external device, based on the obtained related information of the external device, identify a projection area on which to project a screen related to the received state information among the at least one area, and control the projection part to project the screen on the identified projection area.

According to an embodiment of the disclosure, the processor may be configured to, based on the obtained related information and the received state information, identify the projection area among the at least one area. The obtained related information may include at least one of information for identification of the external device, information on a type of the external device, information on a surface of the external device, information on a major operation of the external device, or information on components included in the external device.

According to an embodiment of the disclosure, the processor may be configured to, based on at least one of an amount of the received state information or an importance of the received state information, identify a threshold size for the identified projection area, and, based on a size of the surface of the external device being greater than or equal to the identified threshold size, identify the area on the surface of the external device as the identified projection area.

According to an embodiment of the disclosure, the processor may be configured to, based on the size of the surface of the external device being smaller than the identified threshold size, and a display being included in the external device, identify an area adjacent to the display among the at least one area around the external device as the identified projection area, and, based on the size of the surface of the external device being smaller than the threshold size, and the display not being included in the external device, identify an area adjacent to a component of the external device performing the major operation among the at least one area around the external device as the identified projection area.

According to an embodiment of the disclosure, the processor may be configured to, based on the obtained related information including the information on the components included in the external device, identify a component among the components included in the external device related to the received state information, and control the projection part to project the screen on a location corresponding to the identified component in the identified projection area.

According to an embodiment of the disclosure, the processor may be configured to, based on the received state information and the obtained related information, identify whether to project the screen through the projection part, based on identifying that the screen will not be projected, control the communicator to transmit the received state information to a user terminal, and, based on identifying that the screen will be projected, obtain the image of the external device through the camera.

According to an embodiment of the disclosure, the processor may be configured to, based on the received state information, identify whether to project the screen through the projection part according to whether an importance of the received state information corresponds to urgency.

According to an embodiment of the disclosure, the electronic device may further include a driver. The processor may be configured to control the driver and the projection part to project the screen on the identified projection area.

According to an embodiment of the disclosure, the processor may be configured to obtain an image for a user through the camera, based on the obtained image for the user, obtain information on the user, and, based on the obtained information on the user, the obtained related information, and the received state information, identify the projection area among the at least one area. The obtained information on the user may include at least one of information on a location of the user, information on a direction in which a head of the user is facing, information on a distance between the user and the external device, or information on a life pattern of the user.

According to an embodiment of the disclosure, the processor may be configured to, based on the direction in which the head of the user is facing being maintained during a predetermined time, identify an area corresponding to the direction in which the head is facing as the projection area, identify whether the external device is in a state of performing a predetermined operation based on the received state information, based on the external device being in a state of performing the predetermined operation, control the driver and the projection part to project the screen including information on a proceeding situation of the operation, and, based on the external device being in a state of not performing the operation, control the driver and the projection part to project the screen including information for controlling an operation of the external device.

According to an embodiment of the disclosure, the processor may be configured to, based on identifying that the received state information is displayed on a plurality of screens on a basis of the received state information, control the driver and the projection part to project a first screen among the plurality of screens on the identified projection area, and, based on identifying that the user performed an operation corresponding to the projected first screen based on the obtained image for the user being obtained while the first screen among the plurality of screens is being projected, control the driver and the projection part to project a second screen subsequent to the first screen among the plurality of screens.

According to an embodiment of the disclosure, provided is a method of controlling an electronic device including a communicator, a camera, and a projection part, the method including receiving, through the communicator, state information indicating an operation state of an external device; obtaining, from a memory, related information of the external device; based on an image of the external device obtained through the camera, identifying at least one area from among an area on a surface of the external device and an area around the external device; based on the obtained related information of the external device, identifying a projection area on which to project a screen related to the received state information among the at least one area; and projecting the screen on the identified projection area.

According to an embodiment of the disclosure, the identifying the projection area may include, based on the obtained related information and the received state information, identifying the projection area among the at least one area. The obtained related information may include at least one of information for identification of the external device, information on a type of the external device, information on a surface of the external device, information on a major operation of the external device, or information on components included in the external device.

According to an embodiment of the disclosure, the identifying the projection area may include, based on at least one of an amount of the received state information or an importance of the received state information, identifying a threshold size for the identified projection area; and, based on a size of the surface of the external device being greater than or equal to the identified threshold size, identifying the area on the surface of the external device as the projection area.

According to an embodiment of the disclosure, the identifying the projection area may include, based on the size of the surface of the external device being smaller than the identified threshold size, and a display being included in the external device, identifying an area adjacent to the display among the at least one area around the external device as the identified projection area; and, based on the size of the surface of the external device being smaller than the threshold size, and the display not being included in the external device, identifying an area adjacent to a component of the external device performing the major operation among the at least one area around the external device as the identified projection area.

According to an embodiment of the disclosure for achieving the aforementioned purpose, a controlling method of an electronic device may include the steps of receiving state information indicating an operation state of the external device, identifying at least one area from among an area on a surface of the external device and at least one area around the external device based on an image for the external device, and based on the related information of the external device, identifying a projection area for providing a screen related to the state information among the at least one area, and projecting the screen on the projection area.

Meanwhile, the step of identifying the projection area may include the step of, based on the related information and the state information, identifying the projection area among the at least one area, and the related information may include at least one of information for identification of the external device, information on the type of the external device, information on the surface of the external device, information on a major operation of the external device, or information on components included in the external device.

Meanwhile, the step of identifying the projection area may further include the steps of, based on at least one of the amount of the state information or the importance of the state information, identifying a threshold size for the projection area, and based on the size of the surface being greater than or equal to the threshold size, identifying the area on the surface among the at least one area as the projection area.

Meanwhile, the step of identifying the projection area may further include the steps of, based on the size of the surface being smaller than the threshold size, and a display being included in the external device, identifying an area adjacent to the display among the at least one area as the projection area, and based on the size of the surface being smaller than the threshold size, and the display not being included in the external device, identifying an area adjacent to a component of the external device performing the major operation among the at least one area as the projection area.

Meanwhile, the controlling method of an electronic device may further include the steps of, based on the state information and the information on the components included in the external device, identifying a component of the external device related to the state information, and projecting the screen on a location corresponding to the identified component in the projection area.

Meanwhile, the controlling method of an electronic device may further include the steps of, based on the state information and the related information, identifying whether to project the screen, and based on identifying that the screen will not be projected, transmitting the state information to a user terminal, and based on identifying that the screen will be projected, obtaining the image.

Meanwhile, the controlling method of an electronic device may further include the steps of obtaining an image for a user, and based on the image for the user, obtaining information on the user, and the step of identifying the projection area may include the step of, based on the information on the user, the related information, and the state information, identifying the projection area among the at least one area, and the information on the user may include at least one of information on a location of the user, information on a direction of the user's head, information on a distance between the user and the external device, or information on a life pattern of the user.

Meanwhile, the step of identifying the projection area may further include the step of, based on the direction of the user's head being maintained during a predetermined time, identifying an area corresponding to the direction of the user's head as the projection area, and the controlling method of an electronic device may further include the steps of identifying whether the external device is in a state of performing a predetermined operation based on the state information, and based on the external device being in a state of performing the operation, projecting the screen including information on a proceeding situation of the operation, and based on the external device being in a state of not performing the operation, projecting the screen including information for controlling an operation of the external device.

Meanwhile, the controlling method of an electronic device may further include the steps of, based on identifying that the state information is displayed on a plurality of screens on the basis of the state information, projecting a first screen among the plurality of screens on the projection area, and based on identifying that the user performed an operation corresponding to the first screen based on an image for the user obtained while the first screen is being projected, projecting a second screen subsequent to the first screen.

### [BRIEF DESCRIPTION OF THE DRAWINGS]

Other aspects, characteristics, and advantages of an embodiment according to the disclosure will become clearer from the following description described with reference to the accompanying drawings of which:
FIG. 1 is a diagram for illustrating an electronic device and an external device according to the disclosure;
FIG. 2 is a block diagram schematically illustrating a configuration of an electronic device according to an embodiment;
FIG. 3 is a diagram illustrating an operation of projecting a screen on an area on a surface of an external device according to an embodiment;
FIG. 4 is a flow chart for illustrating an embodiment related to identifying a projection area based on related information and state information;
FIG. 5 is a diagram illustrating an operation of projecting a screen on an area on a surface adjacent to an external device among at least one area according to an embodiment;
FIG. 6 is a flow chart for illustrating an embodiment related to identifying whether to project a screen based on state information and related information;
FIG. 7 is a flow chart for illustrating an embodiment related to identifying a projection area and projecting a screen based on related information and information on a user;
FIG. 8 and FIG. 9 are diagrams illustrating a process of identifying a projection area based on information on a direction of a user's head;
FIG. 10 and FIG. 11 are diagrams for illustrating an embodiment related to a size of a screen and a form of a screen;
FIG. 12 to FIG. 14 are diagrams for illustrating an embodiment related to sequentially projecting a plurality of screens and identifying a projection location of a screen within a projection area;
FIG. 15 is a block diagram illustrating in detail a configuration of an electronic device according to an embodiment; and
FIG. 16 is a flow chart illustrating a controlling method of an electronic device according to an embodiment.

### [Mode for Implementing the Invention]

Various modifications may be made to the embodiments of the disclosure, and there may be various types of embodiments. Accordingly, specific embodiments will be illustrated in drawings, and the embodiments will be described in detail in the detailed description. However, it should be noted that the various embodiments are not for limiting the scope of the disclosure to a specific embodiment, but they should be interpreted to include all modifications, equivalents, and/or alternatives of the embodiments of the disclosure. Also, with respect to the detailed description of the drawings, similar components may be designated by similar reference numerals.

Further, in describing the disclosure, in case it is determined that detailed explanation of related known functions or features may unnecessarily confuse the gist of the disclosure, the detailed explanation will be omitted.

In addition, the embodiments below may be modified in various different forms, and the scope of the technical idea of the disclosure is not limited to the embodiments below. Rather, these embodiments are provided to make the disclosure more sufficient and complete, and to fully convey the technical idea of the disclosure to those skilled in the art.

Also, the terms used in the disclosure are used only to explain specific embodiments, and are not intended to limit the scope of the disclosure. Further, singular expressions include plural expressions, unless defined obviously differently in the context.

In addition, in the disclosure, expressions such as "have," "may have," "include," and "may include" denote the existence of such characteristics (e.g.: elements such as numbers, functions, operations, and components), and do not exclude the existence of additional characteristics.

Further, in the disclosure, the expressions "A or B," "at least one of A and/or B," or "one or more of A and/or B" and the like may include all possible combinations of the listed items. For example, "A or B," "at least one of A and B," or "at least one of A or B" may refer to all of the following cases: (1) including at least one A, (2) including at least one B, or (3) including at least one A and at least one B. As another example, "at least one of A, B, or C" or "at least one of A, B, and C" may refer to all of the following cases: (1) including at least one A, (2) including at least one B, (3) including at least one C, (4) including at least one A and at least one B, (5) including at least one A and at least one C, (6) including at least one B and at least one C, or (7) including at least one A and at least one B and at least one C.

Also, the expressions "first," "second," and the like used in the disclosure may describe various elements regardless of any order and/or degree of importance. In addition, such expressions are used only to distinguish one element from another element, and are not intended to limit the elements.

Meanwhile, the description in the disclosure that one element (e.g.: a first element) is "(operatively or communicatively) coupled with/to" or "connected to" another element (e.g.: a second element) should be interpreted to include both the case where the one element is directly coupled to the another element, and the case where the one element is coupled to the another element through still another element (e.g.: a third element).

In contrast, the description that one element (e.g.: a first element) is "directly coupled" or "directly connected" to another element (e.g.: a second element) can be interpreted to mean that still another element (e.g.: a third element) does not exist between the one element and the another element.

Also, the expression "configured to" used in the disclosure may be interchangeably used with other expressions such as "suitable for," "having the capacity to," "designed to," "adapted to," "made to," and "capable of," depending on cases. Meanwhile, the term "configured to" may not necessarily mean that a device is "specifically designed to" in terms of hardware.

Instead, under some circumstances, the expression "a device configured to" may mean that the device "is capable of" performing an operation together with another device or component. For example, the phrase "a processor configured to perform A, B, and C" may mean a dedicated processor (e.g.: an embedded processor) for performing the corresponding operations, or a generic-purpose processor (e.g.: a CPU or an application processor) that can perform the corresponding operations by executing one or more software programs stored in a memory device.

Also, in the embodiments of the disclosure, 'a module' or 'a part' may perform at least one function or operation, and may be implemented as hardware or software, or as a combination of hardware and software. Also, a plurality of 'modules' or 'parts' may be integrated into at least one module and implemented as at least one processor, excluding 'a module' or 'a part' that needs to be implemented as specific hardware.

Meanwhile, various elements and areas in the drawings were illustrated schematically. Accordingly, the technical idea of the disclosure is not limited by the relative sizes or intervals illustrated in the accompanying drawings.

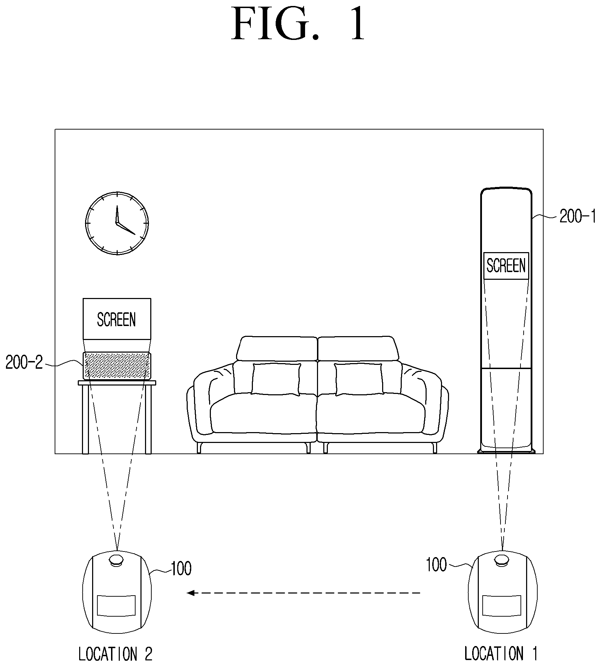

FIG. 1 is a diagram for illustrating an electronic device 100 and an external device 200 according to the disclosure.

'An electronic device 100' refers to a device that can move and project images. Specifically, the electronic device 100 may autonomously drive in a space wherein the electronic device 100 is located (e.g., in a user's home), and may be selected by a user or move to a destination identified by the electronic device 100. Also, the electronic device 100 may be selected by a user within the space wherein the electronic device 100 is located, or project an image on a projection area (or a projection surface) identified by the electronic device 100.

Accordingly, the electronic device 100 may also be referred to as 'a movable projector,' 'a projection robot,' or 'an autonomous driving projector,' etc.

Meanwhile, the feature that 'moving' of the electronic device 100 is 'possible' may include not only the feature that the electronic device 100 can autonomously drive or move to a destination by using a driver 130 of the electronic device 100, but also the feature that moving of the location of the electronic device 100 is possible by a user. In other words, the electronic device 100 may project an image on a projection area within the space wherein the electronic device 100 is located after its location is moved by the user. Accordingly, the electronic device 100 may be 'a portable projector' or 'a small size projector' but not 'a fixed type projector,' and it may also be 'a portable terminal including a projector.'

In FIG. 1, an electronic device 100 that has a body similar to a spherical shape, and includes two wheels on both sides, and includes a component for projecting an image on the front side was illustrated, but the shape of the electronic device 100 is not limited to the shape as illustrated in FIG. 1.

'An external device 200' refers to a device other than the electronic device 100 that is arranged within the space wherein the electronic device 100 is located. There may be one or a plurality of external devices 200 arranged within the space wherein the electronic device 100 is located. In particular, the external device 200 may be a home appliance such as a TV, an air conditioner, a refrigerator, a washing machine, a dryer, a dishwasher, a microwave oven, a cleaner, a speaker, an air purifier, etc., arranged in the space wherein the electronic device 100 is located. In FIG. 1, an air conditioner 200-1 and a speaker 200-2 were illustrated as examples of the external device 200, but there is no special limitation on the type of the external device 200.

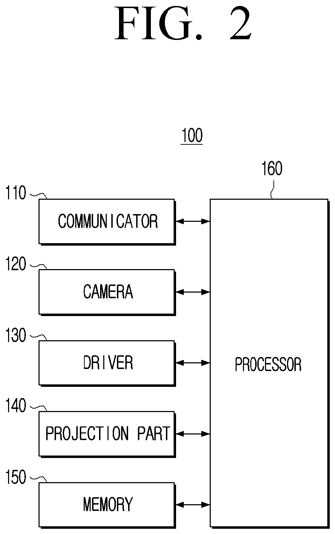

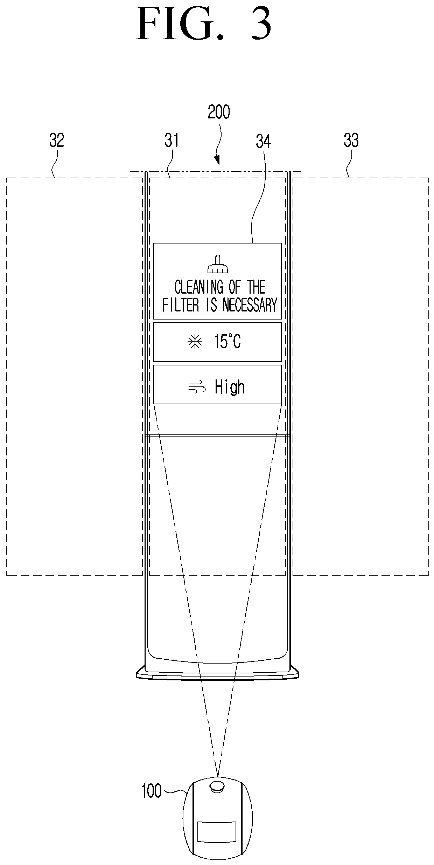

The electronic device 100 may move in the space wherein the electronic device 100 is located, and then project an image on a projection area. Here, 'a projection area' refers to an area on which an image is projected within the space wherein the electronic device 100 is located. Specifically, the projection area may include a wall surface of the space wherein the electronic device 100 is located, an object arranged in the space wherein the electronic device 100 is located (e.g., a projection screen, a curtain, etc.), the surface of the external device 200, etc. More detailed explanation regarding the projection area will be described with reference to FIG. 2 and FIG. 3, etc.

Here, an image projected by the electronic device 100 may be referred to as a screen. 'A screen' generally refers to an image projected by the electronic device 100, and it may be implemented as one or a plurality of screens. The screen may include a user interface (UI), and accordingly, the term screen may be replaced by the term UI. Here, the UI may include texts and graphic elements for providing information to the user, items corresponding to operations that can be selected by the user, etc., and it may be replaced by the term 'a graphic user interface,' etc.

In particular, 'the screen' may be related to state information indicating an operation state of the external device 200. Specifically, the electronic device 100 may receive state information indicating an operation state of the external device 200, and project a screen for providing the received state information on an area on the surface of the external device 200 or an area around the external device 200.

For example, as illustrated in FIG. 1, the electronic device 100 may project a screen on the surface of the air conditioner 200-1 in the location 1, and project the screen on the wall surface in the upper part of the speaker 200-2 after it is moved from the location 1 to the location 2.

Meanwhile, as the electronic device 100 can move freely and project a screen in various locations as described above, when and in which projection area the electronic device 100 will project a screen by which method should be an important matter. In particular, for providing an image and information that suit a user's intent by an effective and efficient method, it may be preferable to consider information on a subject for projection, information on the external device 200, and information on the user, etc. Various embodiments for resolving such a task will be described in detail with reference to FIG. 2 to FIG. 16 below.

FIG. 2 is a block diagram schematically illustrating a configuration of the electronic device 100 according to an embodiment. Also, FIG. 3 is a diagram illustrating an operation of projecting a screen on an area on the surface of the external device 200 according to an embodiment. Hereinafter, explanation will be described with reference to FIG. 2 and FIG. 3 together.

As illustrated in FIG. 2, the electronic device 100 may include a communicator 110, a camera 120, a driver 130, a projection part 140, a memory 150, and a processor 160. As described above, the electronic device 100 may not only move by using the driver 130, but may also be moved by a user. Hereinafter, explanation will be described focused on embodiments implemented by the electronic device 100 including the driver 130, but the embodiments that will be described below can also be applied to a case wherein the electronic device 100 does not use the driver 130 included in the electronic device 100, or a case wherein the electronic device 100 does not include the driver 130.

The communicator 110 may include circuitry, and perform communication with various devices including the external device 200. For example, the processor 160 may receive various types of data or information from the external device 200 connected through the communicator 110, or transmit various types of data or information to the external device 200.

The communicator 110 may include at least one of a Wi-Fi module, a Bluetooth module, a wireless communication module, an NFC module, or an ultra-wide band (UWB) module. Specifically, a Wi-Fi module and a Bluetooth module may perform communication by a Wi-Fi method and a Bluetooth method, respectively. In the case of using a Wi-Fi module or a Bluetooth module, various types of connection information such as an SSID, etc., is transmitted and received first, and connection of communication is performed by using the information, and various types of information can be transmitted and received thereafter.

Also, a wireless communication module may perform communication according to various communication standards such as IEEE, Zigbee, 3rd Generation (3G), 3rd Generation Partnership Project (3GPP), Long Term Evolution (LTE), 5th Generation (5G), etc. In addition, an NFC module may perform communication by a near field communication (NFC) method using a 13.56MHz band among various RF-ID frequency bands such as 135kHz, 13.56MHz, 433MHz, 860 - 960MHz, 2.45GHz, etc. Further, a UWB module can correctly measure a Time of Arrival (ToA) which is the time that a pulse reaches a target, and an Angle of Arrival (AoA) which is a pulse arrival angle in a transmission device through communication between UWB antennas, and accordingly, the UWB module can perform precise distance and location recognition in an error range of within scores of cm indoors.

In particular, according to an embodiment, the processor 160 may receive state information indicating an operation state of the external device 200 from the external device 200 through the communicator 110. The processor 160 may receive related information of the external device 200, information on the user, etc., from the external device 200 through the communicator 110. The processor 160 may control the communicator 110 to transmit the state information received from the external device 200 to a user terminal.

The processor 130 may receive the state information indicating an operation state of the external device 200, the related information of the external device 200, the information on the user, etc., from another device such as a server which is not the external device 200 through the communicator 110. For example, a server is an Internet of Things (IoT) server, and may obtain state information of IoT devices including the external device 200 and store the information, and the electronic device 100 may receive the state information indicating an operation state of the external device 200 from the IoT server through the communicator 110. In particular, in case the power of the external device 200 was turned off or communicative connection between the electronic device 100 and the external device 200 was not established, the processor 130 may receive the state information, etc., from the server. The processor 130 may receive the state information indicating an operation state of the external device 200, the related information of the external device 200, the information on the user, etc., from both of the external device 200 and the server through the communicator 110, and update the state information, the related information of the external device 200, the information on the user, etc.

The camera 120 may obtain an image for at least one object. Specifically, the camera 120 may include an image sensor, and the image sensor may convert a light that enters through a lens into an electric image signal. The term camera 120 may also be replaced by the term image sensor.

The camera 120 may be an RGB camera 120 that can obtain an image by using color channels of red, green, and blue colors, and it may also be an RGB-D camera 120 that can obtain depth information together with color information that can be obtained through the RGB camera 120. Not only that, the camera 120 may also be implemented as a 360 degree camera 120, a panorama camera 120, etc. The camera 120 may be arranged in an opposite direction to the projection part 140, and it may be one camera. However, there is no special limitation on the type, the location, and the number of the camera 120 according to the disclosure.

In particular, according to an embodiment, the processor 160 may obtain an image for the external device 200, an image for the user, etc., through the camera 120. The driver 130 may control driving of the electronic device 100. The driver 130 may include at least one wheel and at least one motor. When a physical force is generated by the at least one motor, the generated force may be transmitted to a hardware component included in the electronic device 100 directly or through a connection element, and accordingly, the hardware included in the electronic device 100 may be driven. The at least one motor included in the driver 130 may be implemented as motors in various types such as a direct current (DC) motor, an alternative current (AC) motor, a brushless DC (BLDC) motor, etc.

According to an embodiment, the processor 160 may control the driver 130 to move the electronic device 100 or the hardware component included in the electronic device 100. For example, the processor 160 may make the electronic device 100 move to a destination by controlling the direction and the speed of at least one wheel. Here, the destination may include not only a final destination but also an intermediate destination, and may include not only a destination selected by the user but also a destination identified by the electronic device 100. Also, the processor 160 may control the projection direction and the projection angle of the projection part 140 such that the projection part 140 can project a screen on a projection area by controlling the driver 130.

The projection part 140 refers to a component that emits a light corresponding to an image for projecting the image. Here, the term 'emit' may be replaced by the term 'radiate,' etc. The projection part 140 may include a light source and at least one lens. The light source may emit a light corresponding to an image, and it may be implemented as, for example, light emitting diodes (LEDs) or laser, etc. The at least one lens is for projecting a light emitted from the light source in a desired direction, and may include a general lens or a lens that can be converted to an ultra short throw (UST) lens. There may be one or a plurality of projection parts 140. The term 'project' may be replaced by the term 'provide' or 'display.'

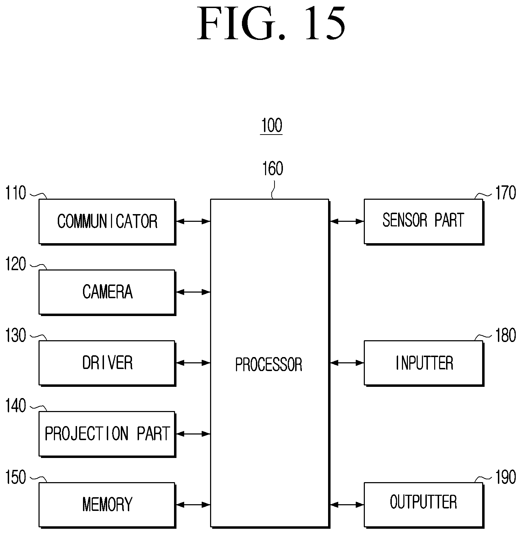

According to an embodiment, the processor 160 may control the projection part 140 to project a screen on a projection area. The projection part 140 may include various detailed components such as a light source, a projection lens, a reflector, etc., and perform various functions related to a projection image. Detailed components and various functions of the projection part 140 will be described in more detail with reference to FIG. 15.

In the memory 150, at least one instruction regarding the electronic device 100 may be stored. Also, in the memory 150, an operating system (O/S) for operating the electronic device 100 may be stored. In addition, in the memory 150, various types of software programs or applications for the electronic device 100 to operate according to the various embodiments of the disclosure may be stored. Further, the memory 150 may include semiconductor memory such as flash memory, etc., or a magnetic storage medium such as a hard disk, etc.

Specifically, in the memory 150, various types of software modules for the electronic device 100 to operate according to the various embodiments of the disclosure may be stored, and the processor 160 may control the operations of the electronic device 100 by executing the various types of software modules stored in the memory 150. That is, the memory 150 may be accessed by the processor 160, and reading/recording/correction/deletion/update, etc., of data by the processor 160 may be performed.

Meanwhile, in the disclosure, the term memory 150 may be used as a meaning including the memory 150, a ROM and a RAM inside the processor 160, or a memory card (e.g., a micro SD card, a memory stick) installed on the electronic device 100.

In particular, according to an embodiment, in the memory 150, the related information of the external device 200, the state information indicating an operation state of the external device 200, and the information on the user may be stored. The term 'related information' is used as a term for generally referring to information related to the external device 200. A method for obtaining the related information, and specifically what kind of information the related information includes will be described below in the explanation regarding the processor 160.

Also, in the memory 150, various types of information such as information on a screen, information on at least one identified area, information on an identified projection area, information on a threshold size for the projection area, information on a standard for defining the importance of the state information, information on a neural network model, etc., may be stored.

Other than the above, various types of information necessary within a range for achieving the purpose of the disclosure may be stored in the memory 150, and the information stored in the memory 150 may be updated as information is received from the external device 200 or is input by the user.

The processor 160 controls the overall operations of the electronic device 100. Specifically, the processor 160 may be connected to the components of the electronic device 100 including the communicator 110, the camera 120, the driver 130, the projection part 140, and the memory 150, and may control the overall operations of the electronic device 100 by executing the at least one instruction stored in the memory 150 as described above.

The processor 160 may be implemented in various ways. For example, the processor 160 may be implemented as at least one of an application specific integrated circuit (ASIC), an embedded processor, a microprocessor, a hardware control logic, a hardware finite state machine (FSM), or a digital signal processor (DSP). Meanwhile, in the disclosure, the term processor 160 may be used as a meaning including a central processing unit (CPU), a graphic processing unit (GPU), and a micro processor unit (MPU), etc.

In particular, according to an embodiment, the processor 160 may identify at least one area from among an area on the surface of the external device 200 and an area around the external device 200, and identify a projection area for providing a screen among the at least one identified area, and project a screen on the identified projection area. Hereinafter, various embodiments implemented by the processor 160 will be explained. Meanwhile, in the disclosure, the term 'identify' may be replaced by the term 'determine.'

The processor 160 may receive the state information indicating an operation state of the external device 200 through the communicator 110. Specifically, the processor 160 may receive the state information indicating an operation state of the external device 200 based on at least one of an occurrence of a predetermined event or a user's input. For example, the processor 160 may receive the state information whenever a predetermined cycle comes. As described above, the processor 160 may receive the state information indicating an operation state of the external device 200 from the external device 200 through the communicator 110, or receive the state information indicating an operation state of the external device 200 from another device which is not the external device 200 such as a server through the communicator 110. The term 'state information' is used as a term for generally referring to information on an operation state of the external device 200. Specifically, the state information may include at least one of information regarding whether the external device 200 is performing an operation, detailed information regarding the operation that the external device 200 is performing, or information on a necessary measure for the operation of the external device 200.

The state information may indicate information on an operation state of the external device 200 on a time point when the external device 200 transmits the state information to the electronic device 100. Also, the state information may be consistently received per predetermined cycle, and may be updated whenever information is received.

The processor 160 may identify at least one area from among an area on the surface of the external device 200 and an area around the external device 200 based on an image for the external device 200 obtained through the camera 120.

'An image for the external device 200' refers to an image including information on the external device 200, and may include not only information on the external device 200, but also information on an object, a wall surface, etc., around the external device 200. Also, an image for the external device 200 may mean not only an image that was obtained through the camera 120 in real time while the electronic device 100 moves, but also an image that was already obtained through the camera 120 and stored in the memory 150.

The processor 160 may obtain an image for the external device 200 through the camera 120. While the electronic device 100 moves, the processor 160 may obtain an image for the external device 200 through the camera 120. The processor 160 may also obtain an image for the external device 200 by receiving image data from another external device including the camera 120 through the communicator 110.

When an image for the external device 200 is received, the processor 160 may identify at least one area from among an area on the surface of the external device 200 and an area around the external device 200 by analyzing the image for the external device 200.

'At least one area' is used as a term for generally referring to an area that can be a projection area according to the disclosure. Hereinafter, the term 'at least one area' means an area identified based on an image for the external device 200, and it may be replaced by terms such as 'a candidate area,' 'a projection candidate area,' etc.

The at least one area may include at least one of an area on the surface of the external device 200 or an area around the external device 200. Specifically, the at least one area may include both of an area on the surface of the external device 200 or an area around the external device 200. The at least one area may include only an area on the surface of the external device 200, and may not include an area around the external device 200. Also, the at least one area may not include an area on the surface of the external device 200, but include only an area around the external device 200.

'An area on the surface of the external device 200' may be any area on the surface of the external device 200, and may be a plurality of areas on the surface of the external device 200. Also, 'an area around the external device 200' may not only be a wall surface around the external device 200, but also an area on surfaces of various objects such as furniture, a curtain, etc., and may be a plurality of areas around the external device 200. To an area of what distance an area around the external device 200 would include may vary according to how the user or the developer sets a threshold distance for defining 'the surroundings' of the external device 200.

The at least one area may be vertical planes that are vertical based on the bottom surface of the space wherein the electronic device 100 is located, but is not limited thereto. For example, the bottom surface of the space wherein the electronic device 100 is located, the ceiling surface that is horizontal based on the bottom surface, the surface of the external device 200 that constitutes a curved surface, a surface of an object that constitutes a curved surface, etc., may also be identified as the at least one area. Also, there is no special limitation on the number of the at least one area.

For example, as in the example of FIG. 3, in case an image for an air conditioner which is the external device 200 was obtained, the processor 160 may identify an area 31 on the front surface of the air conditioner, an area 32 on the wall surface on the left side of the air conditioner, and an area 33 on the wall surface on the right side of the air conditioner as the at least one area based on the obtained image.

Hereinafter, explanation will be described focused on a case wherein the electronic device 100 identifies the at least one area in real time based on an image for the external device 200, but the processor 160 may identify the at least one area based on a space map stored in advance in the memory 150.

Specifically, the processor 160 may obtain a plurality of images for the space wherein the electronic device 100 is located, and obtain a map for the space wherein the electronic device 100 is located based on the plurality of obtained images. The map for the space may be a three-dimensional map including information on the horizontal planes and the vertical planes of the space wherein the electronic device 100 is located, and may be updated as an image for the space wherein the electronic device 100 is located is obtained. When the map for the space is updated and stored in the memory 150, the processor 160 may identify the at least one area based on the updated space map without obtaining an image for the external device 200.

The processor 160 may identify a projection area for providing a screen related to the state information among the identified at least one area based on the related information of the external device 200. When the projection area is identified, the processor 160 may project a screen on the projection area.

The term 'related information of the external device' is a term for generally referring to information related to the external device 200, and it may be briefly referred to as 'related information.' Also, the related information of the external device may be replaced by terms such as 'information on the external device 200,' 'type information,' etc. Specifically, the related information may include at least one of information for identification of the external device 200, information on the type of the external device 200, information on the surface of the external device 200, information on a major operation of the external device 200, or information on components included in the external device 200.

'The information on the type of the external device 200' may include information on the operation type of the external device 200 (e.g., an air conditioner, a washing machine, etc.), information on the model of the external device 200 (e.g., an ABC-111 model of S company), information on the detailed specification of the external device 200, etc.

'The information on the surface of the external device 200' may include information on the area of the surface of the external device 200, information on the shape, information on the form, information on the color, information on the material, etc.

'The information on a major operation of the external device 200' may include information regarding what a major operation among operations performed by the external device 200 is. For example, in case the external device 200 is an air conditioner, the information on a major operation of the external device 200 may include information regarding the fact that a major operation of the air conditioner is 'air blowing.'

'The information on components included in the external device 200' may include information regarding whether the external device 200 includes a specific hardware component, information on the specification of the hardware component included in the external device 200, etc. For example, the information on components included in the external device 200 may include information regarding whether the external device 200 includes a display, information on the size and the location of the display included in the external device 200, etc.

Other than the information described above, the related information may include information regarding the feature of identifying a projection area for providing a screen as information related to the external device 200, and may be obtained by the processor 160 and then stored in the memory 150.

The processor 160 may obtain the related information of the external device 200 based on an image for the external device 200. For example, the processor 160 may obtain an image for the external device 200 through the camera 120, and obtain information on the type of the external device 200, information on the surface of the external device 200, etc., by analyzing the image for the external device 200, or inputting the image for the external device 200 into a trained neural network model.

The processor 160 may also obtain the related information of the external device 200 by receiving the related information of the external device 200 from at least one of the external device 200 or another external device such as a server. For example, the electronic device 100 may receive information for identification of the external device 200, information on the type of the external device 200, etc., from the external device 200 while performing communicative connection with the external device 200.

The processor 160 may receive the related information of the external device 200 that the external device 200 transmitted to the server through communicative connection with the server from the server. In this case, the server may be a server for providing an Internet of Things (IoT) service, and the external device 200 may be a device registered as a device constituting an IoT network, i.e., an IoT device.

In the explanation regarding the disclosure, explanation will be described based on the premise that the related information described above is stored in the memory 150, for the convenience of explanation, but the related information of the external device 200 may be obtained in real time and updated while the electronic device 100 performs an operation.

The processor 160 may identify a projection area based on the related information of the external device 200. Specifically, as will be described in detail below, the processor 160 may identify a projection area among the at least one area based on at least some of various types of related information. In the disclosure, the feature of identifying a projection area based on the related information of the external device 200 does not exclude the fact that a projection area can be identified by using other types of information (e.g., the state information, the information on the user) other than the related information together with the related information.

'A projection area' refers to an area for projecting a screen related to the state information among the at least one area. The projection area is just an area distinguished from an area on which a screen is not projected among the at least one area, and a screen does not need to be projected on the entire projection area. That is, a screen may be displayed on the entire projection area or a part of it. For example, as illustrated in FIG. 3, in case the projection area is identified as the area 31 on the surface of the electronic device, a screen may be displayed on a part within the area 31.

If the at least one identified area is one area, the processor 160 may identify the identified one area as a projection area. However, hereinafter, embodiments wherein a projection area is identified among a plurality of areas will be explained based on the premise that a plurality of areas including an area on the surface of the external device 200 and an area around the external device 200 were identified as the at least one area.

The processor 160 may identify a projection area based on the information on the type of the external device 200. Specifically, in the memory 150, information on priorities regarding which area from among an area on the surface of the external device 200 and an area around the external device 200 will be preferentially identified as a projection area for each type of the external device 200 may be stored. Further, the processor 160 may identify an area as a projection area by using information matched to the information on the type of the external device 200 among the priority information stored in the memory 150. For example, if the external device 200 is "a stand type air conditioner," the processor 160 may identify an area on the surface of the external device 200 as a projection area, and if the external device 200 is "a wall-mounted type air conditioner," the processor 160 may identify an area around the external device 200 as a projection area.

The processor 160 may identify a projection area based on the information on the surface of the external device 200. For example, the processor 160 may identify whether it would be appropriate to project a screen on the surface of the external device 200 based on at least one of the area of the surface of the external device 200, the shape, the form, or the material. If it is identified that it would be appropriate to project a screen on the surface of the external device 200, the processor 160 may identify the surface of the external device 200 among the at least one area as a projection area. If it is identified that it would not be appropriate to project a screen on the surface of the external device 200, the processor 160 may identify an area around the external device 200 among the at least one area as a projection area.

The processor 160 may identify a projection area based on the information on a major operation of the external device 200. For example, in case the external device 200 is an air conditioner, the processor 160 may identify an area adjacent to an air vent of the air conditioner among the at least one area as a projection area, based on the fact that the major operation of the air conditioner is air blowing.

The processor 160 may identify a projection area based on the information on components included in the external device 200. For example, in case the external device 200 includes a display, the processor 160 may identify an area adjacent to the display among the at least one area as a projection area. In case the external device 200 includes a button for a user input, the processor 160 may identify an area adjacent to the button among the at least one area as a projection area.

When a projection area is identified, the processor 160 may control the projection part 140 to project a screen on the projection area. Also, the processor 160 may control the driver 130 and the projection part 140 to project a screen on the projection area. After at least one of the location or the projection angle of the electronic device 100 was changed by the user, the processor 160 may control the projection part 140 to project a screen on the projection area.

The processor 160 may control the driver 130 such that the electronic device 100 moves to a location wherein a screen can be projected on the identified projection area. Also, the processor 160 may control the projection angle of the projection part 140 such that a screen can be projected on the identified projection area. In case the electronic device 100 is already in a location wherein a screen can be projected on the projection area, the processor 160 may perform control such that the electronic device 100 maintains the location, and only the projection angle of the projection part 140 is changed.

After the electronic device 100 gets in a state wherein it can project a screen on the identified projection area by the driver 130, the processor 160 may control the projection part 140 such that a screen is projected on the identified projection area. The processor 160 may also control the driver 130 and the projection part 140 such that a screen is projected on the projection area while the electronic device 100 moves.

For example, as in the example of FIG. 3, in case the area 31 on the front surface of the air conditioner, the area 32 on the wall surface on the left side of the air conditioner, and the area 33 on the wall surface on the right side of the air conditioner were identified as the at least one area, the processor 160 may identify the area 31 on the front surface of the air conditioner among the at least one area as a projection area according to an embodiment among the various embodiments as described above, and control the driver 130 and the projection part 140 to project a screen 34 on the projection area. As illustrated in FIG. 3, the screen 34 may include information that cleaning of the filter of the air conditioner is necessary, information on the set temperature of the air conditioner, and information on the strength of the wind of the air conditioner.

According to the embodiments described above with reference to FIG. 2 and FIG. 3, the electronic device 100 can provide the state information on the external device 200 by a method that suits the user's intent and intuition by using the related information of the external device 200. In particular, the electronic device 100 may project the state information on the external device 200 which does not include a display or of which size of the display is restrictive on an area on the surface of the external device 200 or an area around the external device 200, and can thereby effectively provide the state information on the external device 200.

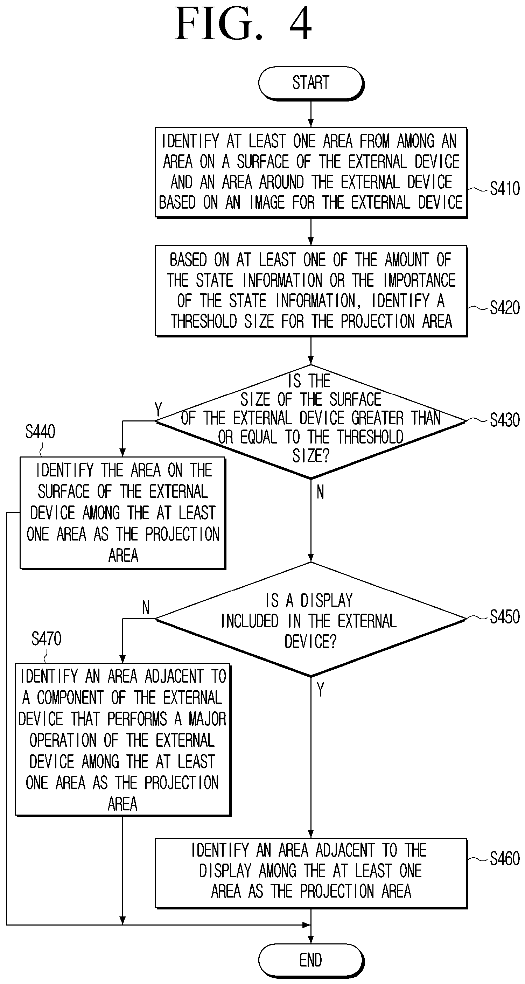

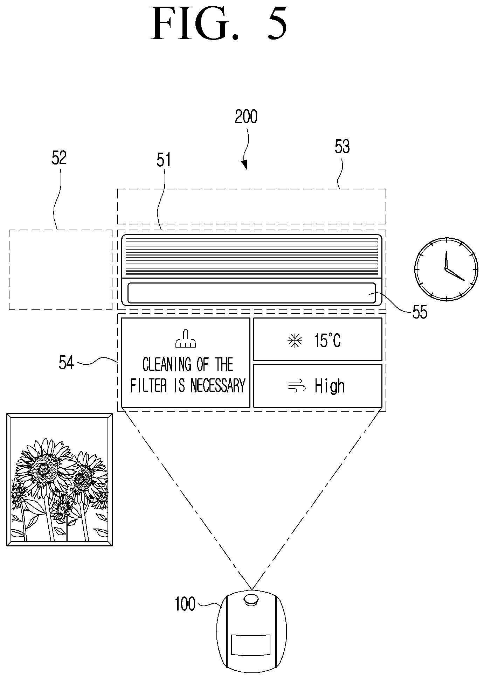

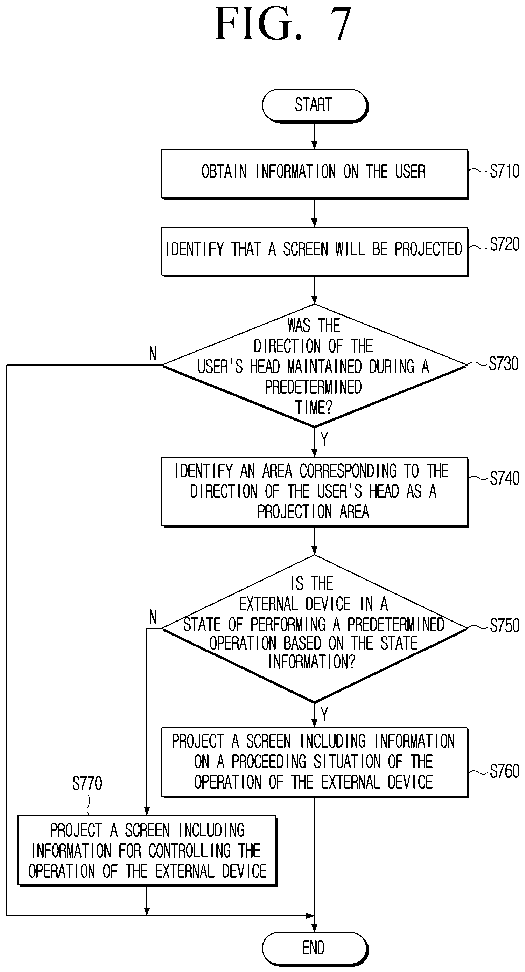

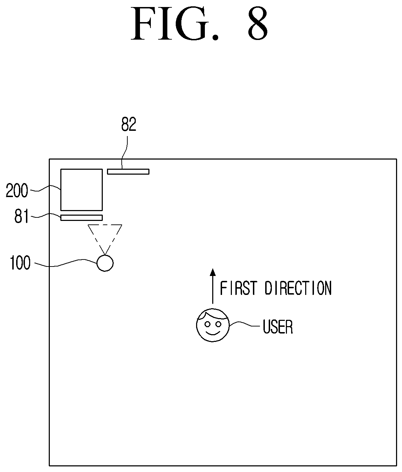

Meanwhile, in the above, an embodiment related to the feature of identifying a projection area based on the related information of the external device 200 was explained, but the processor 160 may identify a projection area based on the state information, or identify a projection area based on the information on the user. An embodiment related to the feature of identifying a projection area based on the state information will be explained with reference to FIG. 4 and FIG. 5, and an embodiment related to the feature of identifying a projection area based on the information on the user will be explained with reference to FIG. 7 and FIG. 8.

FIG. 4 is a flow chart for illustrating an embodiment related to identifying a projection area based on related information and state information. Also, FIG. 5 is a diagram illustrating an operation of projecting a screen on an area on a surface adjacent to the external device 200 among at least one area according to an embodiment. Hereinafter, explanation will be described with reference to FIG. 4 and FIG. 5 together.

In the explanation regarding FIG. 2 and FIG. 3, embodiments wherein a projection area is identified based on the related information of the external device 200 were explained, but the processor 160 may identify a projection area based on the related information and the state information.

The processor 160 may identify at least one area including an area on the surface of the external device 200 and at least one area around the external device 200 based on an image for the external device 200 in operation S410. Specifically, the processor 160 may identify at least one area based on the location and the size of the external device 200 and a location and a size of an object around the external device 200 included in an image for the external device 200.

For example, as in the example of FIG. 5, in case an image for an air conditioner which is the external device 200 was obtained, the processor 160 may identify an area 51 on the front surface of the air conditioner, an area 52 on the wall surface on the left side of the air conditioner, an area 53 on the wall surface in the upper part of the air conditioner, and an area 54 on the wall surface under the lower part of the air conditioner as the at least one area based on the obtained image.

As a photo frame is located on the wall surface under the lower part of the air conditioner, the processor 160 may identify the area 54 on the wall surface under the lower part of the air conditioner as one area among the at least one area within a range not overlapping with the photo frame. Also, as a clock is located in a location adjacent to the air conditioner on the wall surface on the right side of the air conditioner, the processor 160 may not identify an area on the wall surface on the right side of the air conditioner as the at least one area.

The processor 160 may identify a threshold size for a projection area based on at least one of the amount of the state information or the importance of the state information in operation S420. Specifically, the processor 160 may identify the threshold size for a projection area to be bigger as the amount of the state information is bigger, and identify the threshold size for a projection area to be bigger as the importance of the state information is bigger.

Here, 'the importance of the state information' may be identified according to a predefined standard. Specifically, the state information may include first state information indicating that an immediate measure is necessary, second state information indicating that a measure is necessary within a few days, third state information which is information consistently updated, and fourth sate information indicating a general operation state of the external device 200 in the order of importance. The processor 160 may also obtain a score which is a quantitative value corresponding to the importance of the state information.

For example, the first state information may be information indicating opening of a door of a refrigerator, completion of washing of a washing machine, detection of a malfunction of a device, etc. The second state information may be information indicating necessity of replacing a filter of an air conditioner, necessity of replacing a filter of an air purifier, doubt of a breakdown of a device, etc. The third state information may be information indicating a fine dust alert, a notification of software update, and a result of monitoring an operation state. The fourth state information may be information indicating an indoor temperature, indoor humidity, fine dust concentration, information on a temperature inside a refrigerator, etc.

Referring to FIG. 5, the state information may include information that cleaning of the filter of the air conditioner is necessary, the indoor temperature is 15°C, and the strength of the wind of the air conditioner is strong. In this case, the processor 160 may identify the threshold size for a projection area based on the fact that there are three kinds of amounts of information that will be provided through a screen, the information that cleaning of the filter of the air conditioner is necessary is the second state information and is the state information of which importance is the second highest, etc.

If the size of the surface of the external device 200 is greater than or equal to the threshold size in operation S430-Y, the processor 160 may identify an area on the surface of the external device 200 among the at least one area as the projection area in operation S440. If the size of the surface of the external device 200 is smaller than the threshold size in operation S430-N, and a display is included in the external device 200 in operation S450-Y, the processor 160 may identify an area adjacent to the display among the at least one area as the projection area in operation S460. If the size of the surface is smaller than the threshold size in operation S430-N, and a display is not included in the external device 200 in operation S450-N, the processor 160 may identify an area adjacent to a component of the external device 200 that performs a major operation of the external device 200 among the at least one area as the projection area in operation S470.

Referring to the example of FIG. 3, the processor 160 may identify that the size of the surface of the external device 200 is greater than or equal to the threshold size, and identify the area 31 on the surface of the external device 200 among the at least one area 31, 32, 33 as the projection area.

In contrast, referring to the example of FIG. 5, the processor 160 may identify that the size of the surface of the external device 200 is smaller than the threshold size, and may not identify the area 51 on the surface of the external device 200 among the at least one area 51, 52, 53, 54 as the projection area. The processor 160 may identify that a display is not included in the external device 200, and identify an area adjacent to 'the air vent 55' performing an 'air blowing' operation that is the major operation of the external device 200 among the at least one area, i.e., the area 54 on the wall surface under the lower part of the air conditioner as the projection area.

According to the embodiments described above with reference to FIG. 4 and FIG. 5, the electronic device 100 can provide the state information for the external device 200 by a method that suits the user's intent and intuition by using the state information as well as the related information of the external device 200.

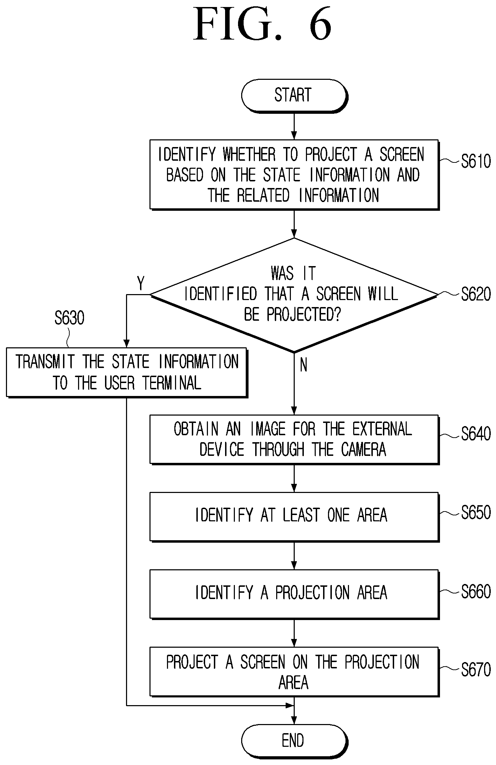

FIG. 6 is a flow chart for illustrating an embodiment related to identifying whether to project a screen based on state information and related information.

In the above, various embodiments were explained based on the premise that it was identified that a screen for providing the state information would be projected. However, the processor 160 may identify whether to project a screen. Specifically, the processor 160 may identify whether to project a screen through the projection part 140 based on the state information and the related information in operation S610.

According to an embodiment, the processor 160 may determine whether to project a screen through the projection part 140 according to whether the importance of the state information corresponds to urgency based on the state information.

Specifically, the processor 160 may identify whether a measure for the operation state of the external device 200 is urgent based on the state information, and identify whether to project a screen through the projection part 140 according to the identification result. If it is identified that the importance of the state information corresponds to urgency, the processor 160 may identify that a screen will not be projected. In contrast, if it is identified that the importance of the state information does not correspond to urgency, the processor 160 may identify that a screen will be projected.

As described above, the state information may include the first state information indicating that an immediate measure is necessary, the second state information indicating that a measure is necessary within a few days, the third state information which is information consistently updated, and the fourth sate information indicating a general operation state in the order of importance.

For example, if the state information is the first state information, the processor 160 may identify that the importance of the state information corresponds to urgency, and identify that a screen will not be projected. If the state information is not the first state information, the processor 160 may identify that the importance of the state information does not correspond to urgency, and identify that a screen will be projected.

According to an embodiment, the processor 160 may identify whether to project a screen through the projection part 140 based on the information on components included in the external device 200 among the information related to the external device 200.

For example, if a display is included in the external device 200, the processor 160 may identify that a screen will not be projected. In contrast, if a display is not included in the external device 200, the processor 160 may identify that a screen will be projected.

As another example, in case a display is included in the external device 200, if the size of the display included in the external device 200 is greater than or equal to the threshold size, the processor 160 may identify that a screen will not be projected. In contrast, if the size of the display included in the external device 200 is smaller than the threshold size, the processor 160 may identify that a screen will be projected.

Other than the above, the processor 160 may identify whether to project a screen based on whether the state information is a type of information that can be displayed through the display included in the external device 200.

According to an embodiment, when the state information is received, the processor 160 may identify whether the operation state of the external device 200 was changed based on the state information, and project a screen only when the operation state of the external device 200 was changed.

If it is identified that a screen will not be projected in operation S620-Y, the processor 160 may control the communicator 110 to transmit the state information to a user terminal in operation S630. In other words, in case the importance of the state information corresponds to urgency, or the state information cannot be displayed through the display included in the external device 200, the processor 160 may provide the state information to the user by transmitting the state information to the user terminal. The user terminal may output the received state information as an image or a voice.

If it is identified that a screen will be projected in operation S620-N, the processor 160 may obtain an image through the camera 120. When an image for the external device 200 is obtained, as described above with reference to FIG. 1, the processor 160 may identify at least one area including an area on the surface of the external device 200 and at least one area around the external device 200 based on the image for the external device 200 in operation S650, and identify a projection area for providing a screen related to the state information among the at least one area based on the related information of the external device 200 in operation S660, and control the driver 130 and the projection part 140 to project a screen on the projection area in operation S670.

In other words, in case a measure for an operation state of the external device 200 is not urgent, or the state information can be displayed through the display included in the external device 200, the processor 160 may provide the state information to the user by projecting a screen without transmitting the state information to the user terminal. As the operations S640 to S670 were explained above, overlapping explanation regarding the same content will be omitted.

According to the embodiments explained above with reference to FIG. 6, the electronic device 100 can provide the state information on the external device 200 by a method that suits the user's intent and intuition by providing the state information by projecting a screen or through the user terminal based on the state information and the related information.

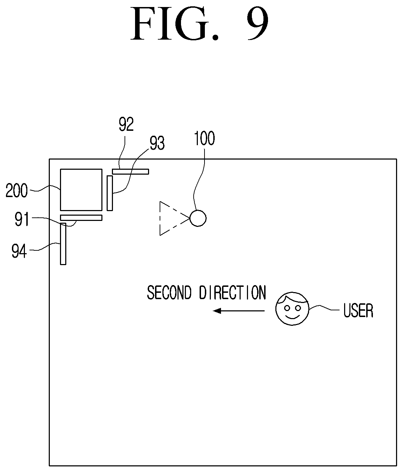

FIG. 7 is a flow chart for illustrating an embodiment related to identifying a projection area and projecting a screen based on related information and information on a user. Also, FIG. 8 and FIG. 9 are diagrams illustrating a process of identifying a projection area based on information on a direction of a user's head.

In the above, embodiments of identifying a projection area based on the related information of the external device 200, and embodiments of identifying a projection area based on the related information and the state information were explained, but the processor 160 may identify a projection area by using the information on the user. That is, the processor 160 may identify a projection area based on the related information of the external device 200 and the information on the user, or identify a projection area based on the related information of the external device 200, the state information, and the information on the user.

Hereinafter, first, embodiments regarding obtaining information on the user and identifying whether to project a screen based on the information on the user will be explained, and then embodiments regarding identifying a projection area by using the information on the user will be explained.

The processor 160 may obtain information on the user in operation S710. The term 'information on the user' is used as a term for generally referring to the information related to the user. Specifically, the information on the user may include at least one of information on the location of the user, information on the direction of the user's head, or information on the distance between the user and the external device 200. Other than the information described above, the information on the user may include information related to identifying a projection area for providing a screen, and projecting a screen as the information related to the user.

The processor 160 may obtain the information on the user based on at least one of an image for the user obtained through the camera 120, information on the location of the user obtained through a sensor part 170 (e.g.: a GPS sensor, an infrared sensor, an ultrasonic sensor, etc.), information on the history that the user used the electronic device 100, information on the history that the user used the external device 200, information on an automation routine registered by the user, or information on establishment/ending of connection between the user's user terminal (e.g.: the user's smartphone, smart watch, etc.) and the electronic device 100/the external device 200 (Wi-Fi communication, Bluetooth communication, etc.).

The processor 160 may obtain the information on the direction of the user's head by obtaining an image for the user through the camera 120, and inputting the image for the user into a neural network model trained to identify a direction of a user's head. Also, the processor 160 may obtain the information on the direction of the user's head by identifying the direction of the user's eyes or the direction of the user's pupils, etc., based on the image for the user.

In case information on the user is collected during a specific period or longer, and the information on the user exhibits a specific pattern according to a predetermined condition or time according to the collected information, the processor 160 may obtain information on the specific pattern as information on the user's life pattern.

The processor 160 may identify whether to project a screen based on not only the related information and the state information, but also the information on the user.

According to an embodiment, the processor 160 may identify whether the user exists in the space wherein the electronic device 100 is located based on the information on the user. If it is identified that the user exists in the space wherein the electronic device 100 is located, the processor 160 may identify that a screen will be projected. If it is identified that the user does not exist in the space wherein the electronic device 100 is located, the processor 160 may identify that a screen will not be projected. Also, in case it was identified that a screen will not be projected, the processor 160 may control the communicator 110 to transmit the state information to the user terminal.

According to an embodiment, the processor 160 may identify whether the user is located in a place adjacent to the external device 200 based on the information on the user. Here, whether the user is located in a place adjacent to the external device 200 may mean whether the user is located in a place wherein he/she can visually recognize the external device 200.

If it is identified that the user is located in a place adjacent to the external device 200, the processor 160 may identify that a screen will be projected. If it is identified that the user is not located in a place adjacent to the external device 200, the processor 160 may identify that a screen will not be projected. Also, in case it was identified that a screen will not be projected, the processor 160 may control the communicator 110 to transmit the state information to the user terminal.

According to an embodiment, the processor 160 may identify whether a screen will be projected based on the information on the user's life pattern and the state information. In other words, the processor 160 may identify whether a screen will be projected based on whether projecting a screen related to the state information suits the user's life pattern.

For example, if it is identified that the user is going to go out based on the information on the user's life pattern, the processor 160 may identify that a screen will be projected for guiding to change the operation state of the external device 200 (e.g.: turn off the power of the external device 200) to correspond to the situation that the user goes out.

As another example, if it is identified that the user is going to come back after going out based on the information on the user's life pattern, the processor 160 may identify that a screen will be projected for guiding that the operation state of the external device 200 was changed to correspond to the situation that the user comes back.

As still another example, in case the operation state of the external device 200 was changed while the user went out, the processor 160 may identify whether to transmit information on the changed operation state to the user terminal, or project a screen including information on the operation state based on the importance of the state information.

In the explanation regarding FIG. 7 below, according to the various embodiments as described above, the feature of identifying a projection area, and projecting a screen on the identified projection area will be explained based on the premise that it was identified that a screen will be projected in operation S720.

The processor 160 may identify a projection area based on the information on the user, the related information of the external device 200, and the state information. In particular, the processor 160 may identify a projection area among the at least one area based on the information on the direction of the user's head.

The processor 160 may obtain the information on the direction of the user's head by obtaining an image for the user through the camera 120, and inputting the image for the user into the neural network model trained to identify a direction of a user's head.

The processor 160 may identify whether the direction of the user's head is maintained during a predetermined time in operation S730. Specifically, the processor 160 may identify whether the direction of the user's head is maintained during the predetermined time by obtaining an image for the user, and obtaining information on the direction of the user's head per predetermined cycle.

If the direction of the user's head is maintained during the predetermined time in operation S730-Y, the processor 160 may identify an area corresponding to the direction of the user's head as a projection area in operation S740. Specifically, the processor 160 may identify an area corresponding to the direction of the user's head as the at least one area, and identify an area corresponding to the direction of the user's head among the at least one area as a projection area.

According to an embodiment, if the direction of the user's head is maintained during the predetermined time, the processor 160 may identify at least one area corresponding to the direction of the user's head, and identify a projection area among the at least one area based on the information on the user, the related information of the external device 200, and the state information.

As illustrated in FIG. 8, if it is identified that the direction of the user's head was maintained during the predetermined time in a first direction, the processor 160 may identify an area 81 on the surface of the external device 200 corresponding to the first direction and an area 82 around the external device 200 corresponding to the first direction as the at least one area. Then, the processor 160 may identify one area among the at least one area as a projection area based on the information on the user, the related information of the external device 200, and the state information.

According to an embodiment, if the direction of the user's head is maintained during the predetermined time, the processor 160 may identify at least one area based on the information on the user, the related information of the external device 200, and the state information, and identify an area corresponding to the direction of the user's head among the at least one area as a projection area.

As illustrated in FIG. 9, the processor 160 may identify an area 91 on the surface of the external device 200 corresponding to the first direction, an area 92 around the external device 200 corresponding to the first direction, an area 93 on the surface of the external device 200 corresponding to the second direction, and an area 94 around the external device 200 corresponding to the second direction as the at least one area. Then, if it is identified that the direction of the user's head was maintained during the predetermined time in the second direction, the processor 160 may identify one area from among the area 93 on the surface of the external device 200 corresponding to the second direction and the area 94 around the external device 200 corresponding to the second direction as a projection area.

If the direction of the user's head was not maintained during the predetermined time in operation S730-N, the processor 160 may identify a projection area among the at least one area based on the information on the user, the related information, or the state information but not the information on the direction of the user's head.

When a projection area is identified, the processor 160 may identify whether the external device 200 is in a state of performing a predetermined operation based on the state information in operation S750. The predetermined operation may be changed according to the setting of the user or the developer, and it may be the entire operations of the external device 200.

If the external device 200 is in a state of performing the predetermined operation in operation S750-Y, the processor 160 may control the driver 130 and the projection part 140 to project a screen including information on a proceeding situation of the predetermined operation in operation S760. This is because the intent of the user watching the external device 200 performing the predetermined operation during the predetermined time or longer is to know the proceeding situation of the predetermined operation of the external device 200 in many cases.

For example, if a washing machine which is the external device 200 is in a state of performing a "washing" operation which is the predetermined operation, the processor 160 may control the driver 130 and the projection part 140 to project a screen including information such as the washing mode, the expected time of completion of washing, etc.

If the external device 200 is not in a state of performing the predetermined operation in operation S750-N, the processor 160 may control the driver 130 and the projection part 140 to project a screen including information for controlling the operation of the external device 200 in operation S770. This is because the intent of the user watching the external device 200 not performing the predetermined operation during the predetermined time or longer is to control the external device 200 to perform the predetermined operation of the external device 200 in many cases.

For example, if a washing machine which is the external device 200 is not in a state of performing a "washing" operation which is the predetermined operation, the processor 160 may control the driver 130 and the projection part 140 to project a screen including information such as setting of the washing mode, etc.

According to the embodiments described above with reference to FIG. 7 to FIG. 9, the electronic device 100 can provide the state information on the external device 200 to an area on the surface of the external device 200 or an area around the external device 200 by a method that suits the user's intent and intuition by using the information on the user as well as the related information of the external device 200.

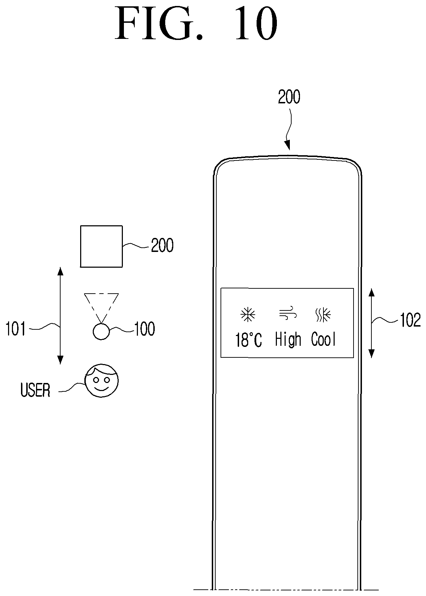

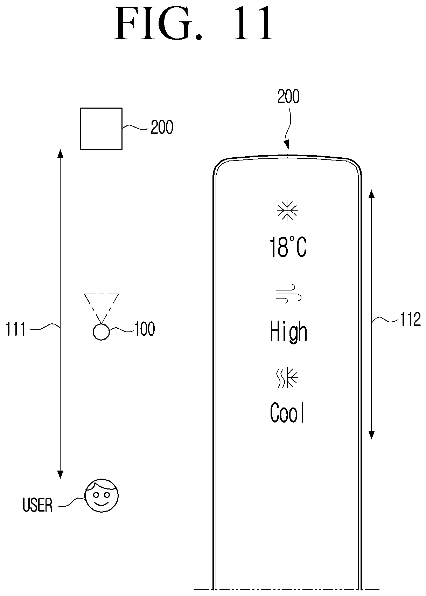

FIG. 10 and FIG. 11 are diagrams for illustrating an embodiment related to a size of a screen and a form of a screen.

In the above, various embodiments were explained focused on an embodiment of identifying whether to project a screen and an embodiment of identifying a projection area of a screen. However, according to an embodiment, the processor 160 may identify at least one of a size of a screen that will be projected on a projection area or a form of the screen.

The processor 160 may obtain information on a distance between the user and the external device 200. Specifically, the processor 160 may obtain information on a distance between the user and the external device 200 by using the communicator 110. The processor 160 may obtain information on the distance between the user and the external device 200 by using the sensor part 170. Also, the processor 160 may obtain information on the distance between the user and the external device 200 based on an image obtained through the camera 120.

For example, the processor 160 may obtain information on the distance between the user and the external device 200 based on a difference in the time when a signal transmitted through the communicator 110 arrives at the user and the time when the signal arrives at the external device 200, and angles by which the signal arrives at the user and the external device 200.

As another example, the processor 160 may obtain information on the distance between the electronic device 100 and the user and information on the distance between the electronic device 100 and the external device 200 by using an infrared sensor or an ultrasonic sensor, etc. Then, the processor 160 may obtain information on the distance between the user and the external device 200 based on the information on the distance between the electronic device 100 and the user and the information on the distance between the electronic device 100 and the external device 200.

When the information on the distance between the user and the external device 200 is obtained, the processor 160 may identify at least one of a size of a screen or a form of the screen based on at least one of the state information or the information on the distance between the user and the external device 200.

According to an embodiment, the processor 160 may identify a size of a screen and sizes of elements included in the screen based on the state information. Specifically, as the amount of the state information is bigger, the processor 160 may identify the size of the screen and the sizes of the elements included in the screen to be bigger, and as the importance of the state information is bigger, the processor 160 may identify the size of the screen and the sizes of the elements included in the screen to be bigger. Also, the processor 160 may constitute a screen layout by adjusting the arrangement of the elements included in the screen based on the state information.

As described above, the state information may include the first state information indicating that an immediate measure is necessary, the second state information indicating that a measure is necessary within a few days, the third state information which is information consistently updated, and the fourth sate information indicating a general operation state of the external device 200 in the order of importance.

Referring to the examples of FIG. 3 and FIG. 5, the information that cleaning of the filter of the air conditioner is necessary is the second state information and is the state information of which importance is the second highest, and thus the size of the screen may be identified according to a predetermined standard, and the size of an element including information that "cleaning of the filter is necessary" may be identified to be bigger compared to an element including information "15°C" and an element including information "high" according to the predetermined standard.

According to an embodiment, the processor 160 may identify the size of the screen and the sizes of the elements included in the screen to be bigger as the distance between the user and the external device 200 is farther. Specifically, the processor 160 may identify the size of the screen and the sizes of the elements included in the screen to be bigger to be proportionate to the distance between the user and the external device 200 within the threshold size for a projection area. Also, if the distance between the user and the external device 200 is greater than or equal to a threshold distance, the processor 160 may change the arrangement and the shapes of the elements included in the screen such that visibility of the user can be improved.

Referring to FIG. 10, the distance 101 between the user and the external device 200 may be 1m, for example. In this case, the processor 160 may identify a screen wherein elements included in the screen are arranged in a horizontal direction, and of which vertical length 102 is 30cm.

Referring to FIG. 11, the distance 111 between the user and the external device 200 may be 3m, for example, and this may be a distance exceeding 2.5m which is the threshold distance. In this case, the processor 160 may identify a screen wherein elements included in the screen are arranged in a vertical direction to correspond to the form of the projection area, and of which vertical length 112 is 1m, such that the screen can be projected in the threshold size for the projection area.

According to the embodiments described above with reference to FIG. 10 and FIG. 11, the electronic device 100 can provide the state information on the external device 200 by a method that suits the user's intent and intuition by controlling the size and the shape of the screen based on the related information of the external device 200, the state information, and the information on the user.

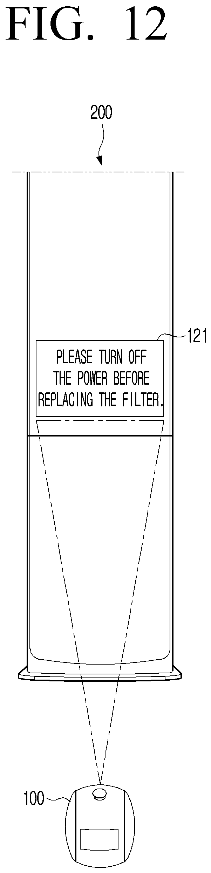

FIG. 12 to FIG. 14 are diagrams for illustrating an embodiment related to sequentially projecting a plurality of screens and identifying a projection location of a screen within a projection area.

In FIG. 12 to FIG. 14, explanation will be described based on the premise of a case wherein an area on the surface of the air conditioner which is the external device 200 was identified as a projection area.

According to an embodiment, the processor 160 may not only project a screen related to the state information, but also sequentially project a plurality of screens related to the state information. Specifically, the processor 160 may identify whether to project a plurality of screens based on at least one of the amount of the state information or the importance of the state information. If it is identified that a plurality of screens will be projected, the processor 160 may control the driver 130 and the projection part 140 to sequentially project a plurality of screens.

Referring to FIG. 12 to FIG. 14, in case the state information indicates necessity of replacing a filter of an air conditioner, the processor 160 may identify that a plurality of screens corresponding to each of a plurality of measures related to replacement of a filter of an air conditioner will be projected.

According to an embodiment, the processor 160 may control the driver 130 and the projection part 140 to sequentially project a plurality of screens based on whether the user performed operations corresponding to each of the plurality of screens. Specifically, while a first screen among the plurality of screens is projected, the processor 160 may identify whether the user performed an operation corresponding to the first screen. Then, if it is identified that the user performed an operation corresponding to the first screen, the processor 160 may control the driver 130 and the projection part 140 to project a second screen subsequent to the first screen.

Here, 'whether the user performed an operation corresponding to the first screen' may be identified based on at least one of the state information, an image for the user obtained through the camera 120, or information on a movement or a pose of the user obtained through the sensor.

For example, as illustrated in FIG. 12, the processor 160 may control the driver 130 and the projection part 140 to project the first screen 121 including a text which is "Please turn off the power before replacing the filter."

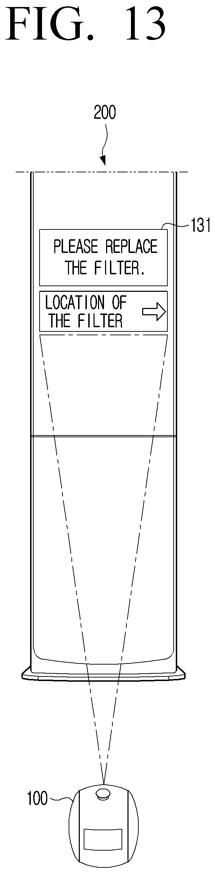

If it is identified that the power of the air conditioner was turned off as a result of identifying whether the user performed an operation corresponding to the first screen, as illustrated in FIG. 13, the processor 160 may control the driver 130 and the projection part 140 to project the second screen 131 including a text which is "Please replace the filter" and "an arrow indicating the location of the filter."

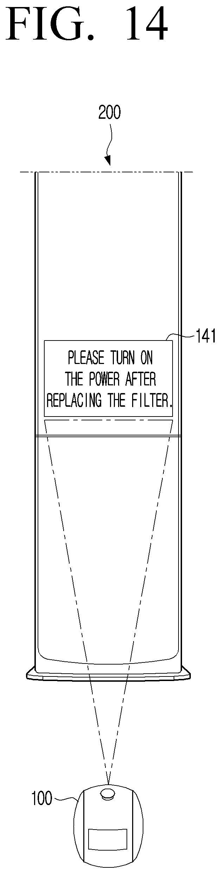

If it is identified that the filter of the air conditioner was replaced as a result of identifying whether the user performed an operation corresponding to the second screen, as illustrated in FIG. 14, the processor 160 may control the driver 130 and the projection part 140 to project the third screen 141 including a text which is "Please turn off the power after replacing the filter."

According to an embodiment, the processor 160 may identify a projection location of a screen that will be projected on a projection area, and project the screen on the identified projection location. Here, the term 'a projection location' means a location on which a screen is projected within a projection area in case a projection area was identified, and thus it may be distinguished from the term 'a projection area' indicating an area that was identified to be for providing a screen among the at least one area.

The processor 160 may identify a projection location of a screen that will be projected on a projection area based on the state information and the information on the components included in the external device 200. Specifically, the processor 160 may identify a component of the external device 200 related to the state information based on the state information and the information on the components included in the external device 200. Here, the component of the external device 200 related to the state information may be a component regarding an operation state of the external device 200 indicated by the state information or a component related to a necessary measure indicated by the state information. When the component of the external device 200 related to the state information is identified, the processor 160 may identify a location corresponding to the identified component in the projection area as the projection location. Then, the processor 160 may control the driver 130 and the projection part 140 to project a screen on the identified projection location. Here, the screen may include a graphic element indicating the projection location.

Referring to FIG. 13, in case the state information indicates the necessity of replacing the filter of the air conditioner, the processor 160 may identify "the filter of the air conditioner" which is a component related to a necessary measure indicated by the state information, and identify a location corresponding to "the filter of the air conditioner" in the projection area as the projection location. Then, the processor 160 may control the driver 130 and the projection part 140 to project a screen including "an arrow indicating the location of the filter" which is a graphic element indicating the projection location on the identified projection location.

According to the embodiments described above with reference to FIG. 12 to FIG. 14, the electronic device 100 may sequentially project a plurality of screens, and also sequentially project a plurality of screens in consideration of an interaction with the user. Accordingly, the electronic device 100 can provide a plurality of screens that suit the user's demand by an effective method particularly in a process of initial installment or repair of the external device 200.

Also, the electronic device 100 can provide the state information on the external device 200 by a method that suits the user's intent and intuition by identifying a projection location within a projection area by using the state information and the related information of the external device 200.

FIG. 15 is a block diagram illustrating in detail a configuration of the electronic device 100 according to an embodiment.

As illustrated in FIG. 15, the electronic device 100 may further include a sensor part 170, an inputter 180, and an outputter 190, as well as the communicator 110, the camera 120, the driver 130, the projection part 140, the memory 150, and the processor 160. However, the components as illustrated in FIG. 2 and FIG. 15 are merely exemplary ones, and it is obvious that in carrying out the disclosure, new components can be added in addition to the components as illustrated in FIG. 2 and FIG. 15, or some components can be omitted.

First, hereinafter, the projection part 140 that was explained with reference to FIG. 2 according to the disclosure will be explained in more detail, and then the communicator 110, the inputter 180, and the outputter 190 will be explained.

The projection part 140 may be implemented by various projection methods (e.g., a cathode-ray tube (CRT) method, a liquid crystal display (LCD) method, a digital light processing (DLP) method, a laser method, etc.). As an example, the CRT method has basically the same principle as a CRT monitor. In the CRT method, an image is enlarged to a lens in front of a cathode-ray tube (CRT), and the image is displayed on a screen. According to the number of cathode-ray tubes, the CRT method is divided into an one-tube method and a three-tube method, and in the case of the three-tube method, the method may be implemented while cathode-ray tubes of red, green, and blue colors are separated from one another.

As another example, the LCD method is a method of displaying an image by making a light output from a light source pass through a liquid crystal display. The LCD method is divided into a single-plate method and a three-plate method, and in the case of the three-plate method, a light output from a light source may be divided into red, green, and blue colors in a dichroic mirror (a mirror that reflects only lights of specific colors, and makes the rest pass through), and pass through a liquid crystal display, and then the lights may be gathered in one place.

As still another example, the DLP method is a method of displaying an image by using a digital micromirror device (DMD) chip. A projection part 140 by the DLP method may include a light source, a color wheel, a DMD chip, a projection lens, etc. A light output from the light source may show a color as it passes through the rotating color wheel. The light that passed through the color wheel is input into the DMD chip. The DMD chip includes numerous micromirrors, and reflects the light input into the DMD chip. The projection lens may perform a role of enlarging the light reflected from the DMD chip to an image size.

As still another example, the laser method includes a diode pumped solid state (DPSS) laser and a galvanometer. As lasers outputting various colors, lasers wherein three DPSS lasers are installed for each of R, G, and B colors, and then their optical axes are overlapped by using a special mirror are used. The galvanometer includes a mirror and a motor of a high output, and moves the mirror at a fast speed. For example, the galvanometer may rotate the mirror at 40 KHz/sec at the maximum. The galvanometer is mounted according to a scanning direction, and in general, a projector performs plane scanning, and thus the galvanometer may also be arranged while being divided into x and y axes.

Meanwhile, the projection part 140 may include light sources of various types. For example, the projection part 140 may include at least one light source among a lamp, LEDs, and a laser.

The projection part 140 may output an image in a screen ratio of 4:3, a screen ratio of 5:4, and a wide screen ratio of 16:9 according to the use of the electronic device 100 or the user's setting, etc., and output a light corresponding to an image in various resolutions such as WVGA (854*480), SVGA (800*600), XGA (1024*768), WXGA (1280*720), WXGA (1280*800), SXGA (1280*1024), UXGA (1600*1200), Full HD (1920*1080), etc., according to screen ratios.

Meanwhile, the projection part 140 may perform various functions for adjusting an output image (i.e., an image projected on a screen). For example, the projection part 140 may adjust a size and a shape, etc., of an output image by performing functions such as zoom, keystone, quick corner (4 corner) keystone, lens shift, etc.

Specifically, the projection part 140 may enlarge or reduce an image according to a distance from a screen (a projection distance). That is, a zoom function may be performed according to a distance from a screen. Here, the zoom function may include a hardware method of adjusting the size of a screen by moving a lens and a software method of adjusting the size of a screen by cropping an image, etc. Meanwhile, when the zoom function is performed, adjustment of a focus of an image is needed. For example, methods of adjusting a focus include a manual focus method, an electric method, etc. The manual focus method means a method of adjusting a focus manually, and the electric method means a method wherein, when the zoom function is performed, the projector automatically adjusts a focus by using a built-in motor. When the zoom function is performed, the projection part 140 may provide a digital zoom function through software, or provide an optical zoom function of performing a zoom function by moving the lens through the driver 130.

Also, the projection part 140 may perform a keystone correction function. If the height does not match in the case of front side projection, the screen may be distorted in an upward direction or a downward direction. The keystone correction function means a function of correcting a distorted screen. For example, if distortion occurs in a left-right direction of the screen, the screen may be corrected by using horizontal keystone, and if distortion occurs in an up-down direction of the screen, the screen may be corrected by using vertical keystone. A quick corner (4 corner) keystone correction function is a function of correcting the screen in case the central area of the screen is normal but the corner areas are out of balance. A lens shift function is a function of moving the screen as it is in case the screen is beyond the projection area.

Meanwhile, the projection part 140 may provide the zoom/keystone/focus functions by automatically analyzing the ambient environment and the projection environment without a user input. Specifically, the projection part 140 may automatically provide the zoom/keystone/focus functions based on the distance between the electronic device 100 and the screen detected through the sensor (a depth camera 120, a distance sensor, an infrared sensor, an illumination sensor, etc.), information on the space wherein the electronic device 100 is currently located, information on the ambient light amount, etc.

Also, the projection part 140 may provide an illumination function by using a light source. In particular, the projection part 140 may provide an illumination function by outputting a light source by using LEDs. According to various embodiments, the projection part 140 may include one LED. According to another embodiment, the electronic device 100 may include a plurality of LEDs. Meanwhile, the projection part 140 may output a light source by using a surface emitting LED depending on implementation examples. Here, a surface emitting LED may mean an LED having a structure wherein an optical sheet is arranged on the upper side of the LED such that a light source is evenly dispersed and output. Specifically, if a light source is output through an LED, the light source may be evenly dispersed through an optical sheet, and the light source dispersed through the optical sheet may be incident on a display panel.

Meanwhile, the projection part 140 may provide a dimming function for adjusting the strength of a light source to the user. Specifically, if a user input for adjusting the strength of a light source is received from the user through a manipulation interface (e.g., a touch display button or a dial), the processor 140 may control the LED to output the strength of the light source corresponding to the received user input.

Also, the projection part 140 may provide a dimming function based on a content analyzed by the processor 160 without a user input. Specifically, the projection part 140 may control the LEDs to output the strength of a light source based on information on a content that is currently provided (e.g., the type of the content, the brightness of the content, etc.).

Meanwhile, the projection part 140 may control a color temperature by control by the processor 160. Here, the processor 160 may control a color temperature based on a content. Specifically, if it is identified that a content will be output, the processor 160 may obtain color information for each frame of the content which was determined to be output. Then, the processor 160 may control the color temperature based on the obtained color information for each frame. Here, the processor 160 may obtain at least one main color of the frame based on the color information for each frame. Then, the processor 160 may adjust the color temperature based on the obtained at least one main color. For example, the color temperature that can be adjusted by the processor 160 may be divided into a warm type or a cold type. Here, it is assumed that a frame to be output (referred to as an output frame hereinafter) includes a scene wherein fire broke out. The processor 160 may identify (or obtain) that the main color is red based on the information on colors included in the current output frame. Then, the processor 160 may identify the color temperature corresponding to the identified main color (red). Here, the color temperature corresponding to the red color may be a warm type. Meanwhile, the processor 160 may use an artificial intelligence model for obtaining the color information or a main color of a frame. According to various embodiments, the artificial intelligence model may be stored in the electronic device 100 (e.g., the memory 150). According to another embodiment, the artificial intelligence model may be stored in an external server that can communicate with the electronic device 100.

The sensor part 170 may detect various types of information inside and outside the electronic device 100. Specifically, the sensor may include at least one of an infrared sensor, an ultrasonic sensor, a global positioning system (GPS) sensor, a gyro sensor (a gyroscope), an acceleration sensor (an accelerometer), a LiDAR sensor, an inertial measurement unit (IMU), or a motion sensor. In addition, the sensor may also include various types of sensors such as an illumination sensor, a temperature sensor, a humidity sensor, a bio sensor, etc.

In particular, according to an embodiment, the processor 160 may obtain information on the location of the external device 200, information on the distance between the external device 200 and the electronic device 100, information on the distance between the external device 200 and the user, etc., through the sensor part 170. The processor 160 may obtain information regarding whether the user exists in the space wherein the electronic device 100 is located through the sensor part 170. Also, the processor 160 may obtain information on a movement or a pose of the user through the sensor part 170.

The processor 160 can implement the various embodiments as described above by using the various types of information obtained through the sensor part 170 together with the related information of the external device 200, the state information, and the information on the user, and an image for the external device 200 and an image for the user.

The inputter 180 includes circuitry, and the processor 160 may receive a user instruction for controlling the operation of the electronic device 100 through the inputter 180. Specifically, the inputter 180 may consist of components such as a microphone, a camera 120, and a remote control signal receiver, etc. Also, the inputter 180 may be implemented in a form of being included in the display as a touch screen. In particular, the microphone may receive a voice signal, and convert the received voice signal into an electric signal.

In particular, according to an embodiment, the processor 160 may receive a user input for projecting a screen, a user input for receiving the state information on the external device 200, a user input for adjusting the size and the shape, etc., of a projected screen, a user input for controlling the moving of the electronic device 100, a user input for changing a map for the space wherein the electronic device 100 is located, a user input for changing the threshold size for a projection area, a user input for changing the predetermined time for a direction of the user's head, etc., through the inputter 180.

The outputter 190 includes circuitry, and the processor 160 may output various functions that can be performed by the electronic device 100 through the outputter 190. Also, the outputter 190 may include at least one of a display, a speaker, or an indicator.

The display may output image data by control by the processor 160. Specifically, the display may output an image stored in advance in the memory 150 by control by the processor 160. In particular, the display according to an embodiment of the disclosure may display a user interface stored in the memory 150. The display may be implemented as a liquid crystal display (LCD) panel, organic light emitting diodes (OLEDs), etc., and the display may also be implemented as a flexible display, a transparent display, etc., depending on cases. However, the display according to the disclosure is not limited to a specific type.

The speaker may output audio data by control by the processor 160. Also, the indicator may be turned on by control by the processor 160. The indicator may be turned on in various colors according to control by the processor 160. For example, the indicator may be implemented as light emitting diodes (LEDs), a liquid crystal display (LCD) panel, a vacuum fluorescent display (VFD), etc., but is not limited thereto.

In particular, according to an embodiment, the processor 160 may output a message for guiding that a screen is being projected on a projection area, a message for providing information included in the screen or additional information for the information included in the screen, a message for guiding that the map for the space wherein the electronic device 100 is located was updated, etc., through the outputter 190.

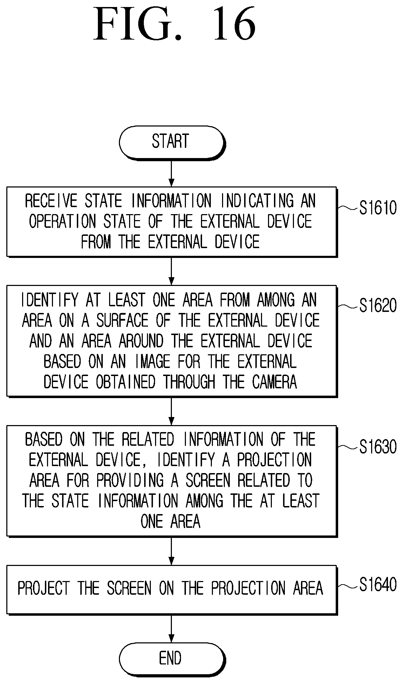

FIG. 16 is a flow chart illustrating a controlling method of the electronic device 100 according to an embodiment.

The electronic device 100 may receive state information indicating an operation state of the external device 200 in operation S1610. Specifically, the electronic device 100 may receive state information indicating an operation state of the external device 200 from the external device 200 based on at least one of occurrence of a predetermined event or a user's input. For example, the electronic device 100 may receive the state information from the external device 200 whenever a predetermined cycle arrives.

The electronic device 100 may identify at least one area including an area on the surface of the external device 200 and at least one area around the external device 200 based on an image for the external device 200 obtained through the camera 120 in operation S1620.

The electronic device 100 may obtain an image for the external device 200 through the camera 120. While the electronic device 100 moves, the electronic device 100 may obtain an image for the external device 200 through the camera 120. The electronic device 100 may also obtain an image for the external device 200 by receiving image data from another external device including the camera 120 through the communicator 110.

When an image for the external device 200 is received, the electronic device 100 may identify at least one area including an area on the surface of the external device 200 and at least one area around the external device 200 by analyzing the image for the external device 200.

The electronic device 100 may identify a projection area for providing a screen related to the state information among the at least one area based on the related information of the external device 200 in operation S1630. When the projection area is identified, the electronic device 100 may project a screen on the projection area in operation S1640.

The electronic device 100 may obtain the related information of the external device 200 based on the image for the external device 200. For example, the electronic device 100 may obtain information on the type of the external device 200, information on the surface of the external device 200, etc., by obtaining an image for the external device 200 through the camera 120, and analyzing the image for the external device 200 or inputting the image for the external device 200 into a trained neural network model.

The electronic device 100 may obtain the related information of the external device 200 by receiving the related information of the external device 200 from at least one of the external device 200 or another external device such as a server. For example, the electronic device 100 may receive information for identification of the external device 200, information on the type of the external device 200, etc., from the external device 200 while performing communicative connection with the external device 200.

The electronic device 100 may also receive the related information of the external device 200 that the external device 200 transmitted to the server through communicative connection with the server from the server. In this case, the server may be a server for providing an Internet of Things (IoT) service, and the external device 200 may be a device registered as a device constituting an IoT network, i.e., an IoT device.

The electronic device 100 may identify a projection area based on at least one of the information on the type of the external device 200, the information on the surface of the external device 200, the information on a major operation of the external device 200, or information on components included in the external device 200.

When the projection area is identified, the electronic device 100 may project a screen on the projection area by controlling the projection part 140. Also, when the projection area is identified, the electronic device 100 may project a screen on the projection area by controlling the driver 130 and the projection part 140.

Meanwhile, the controlling method of the electronic device 100 according to the aforementioned embodiment may be implemented as a program and provided to the electronic device 100. In particular, a program including the controlling method of the electronic device 100 may be provided while being stored in a non-transitory computer readable medium.

Specifically, in a non-transitory computer readable recording medium including a program executing the controlling method of the electronic device 100, the controlling method of the electronic device 100 may include the steps of receiving state information indicating an operation state of the external device 200, identifying at least one area from among an area on a surface of the external device 200 and at least one area around the external device 200 based on an image for the external device 200, and based on the related information of the external device 200, identifying a projection area for providing a screen related to the state information among the at least one area, and projecting the screen on the projection area.

In the above, the controlling method of the electronic device 100, and a computer readable recording medium including a program executing the controlling method of the electronic device 100 were explained briefly, but this is just for omitting overlapping explanation, and the various embodiments regarding the electronic device 100 can obviously be applied to the controlling method of the electronic device 100, and a computer readable recording medium including a program executing the controlling method of the electronic device 100.

Functions related to artificial intelligence according to the disclosure are operated through the processor 160 and the memory 150 of the electronic device 100.

The processor 160 may consist of one or a plurality of processors 160. Here, the one or plurality of processors 160 may include at least one of a central processing unit (CPU), a graphic processing unit (GPU), or a neural processing unit (NPU), but the processors 160 are not limited to the aforementioned examples of the processor 160.

A CPU is a generic-purpose processor 160 that can perform not only general operations but also artificial intelligence operations, and it can effectively execute a complex program through a multilayer cache structure. A CPU is advantageous for a serial processing method that enables a systemic linking between the previous calculation result and the next calculation result through sequential calculations. The generic-purpose processor 160 is not limited to the aforementioned examples excluding cases wherein it is specified as the aforementioned CPU.

A GPU is a processor 160 for mass operations such as a floating point operation used for graphic processing, etc., and it can perform mass operations in parallel by massively integrating cores. In particular, a GPU may be advantageous for a parallel processing method such as a convolution operation, etc., compared to a CPU. Also, a GPU may be used as a co-processor 160 for supplementing the function of a CPU. The processor 160 for mass operations is not limited to the aforementioned examples excluding cases wherein it is specified as the aforementioned GPU.

An NPU is a processor 160 specialized for an artificial intelligence operation using an artificial neural network, and it can implement each layer constituting an artificial neural network as hardware (e.g., silicon). Here, the NPU is designed to be specialized according to the required specification of a company, and thus it has a lower degree of freedom compared to a CPU or a GPU, but it can effectively process an artificial intelligence operation required by the company. Meanwhile, as a processor 160 specialized for an artificial intelligence operation, an NPU may be implemented in various forms such as a tensor processing unit (TPU), an intelligence processing unit (IPU), a vision processing unit (VPU), etc. The artificial intelligence processor 160 is not limited to the aforementioned examples excluding cases wherein it is specified as the aforementioned NPU.

Also, the at least one processor 160 may be implemented as a System on Chip (SoC). Here, in the SoC, the memory 150, and a network interface such as a bus for data communication between the processor 160 and the memory 150, etc., may be further included other than the one or plurality of processors 160.

In case the plurality of processors 160 are included in the System on Chip (SoC) included in the electronic device 100, the electronic device 100 may perform an operation related to artificial intelligence (e.g., an operation related to learning or inference of the artificial intelligence model) by using some processors 160 among the plurality of processors 160. For example, the electronic device 100 may perform an operation related to artificial intelligence by using at least one of a GPU, an NPU, a VPU, a TPU, or a hardware accelerator specified for artificial intelligence operations such as a convolution operation, a matrix product operation, etc., among the plurality of processors 160. However, this is merely an example, and the electronic device 100 can obviously process an operation related to artificial intelligence by using the generic-purpose processor 160 such as a CPU, etc.

Also, the electronic device 100 may perform operations related to artificial intelligence by using a multicore (e.g., a dual core, a quad core, etc.) included in one processor 160. In particular, the electronic device 100 may perform artificial intelligence operations such as a convolution operation, a matrix product operation, etc., in parallel by using the multicore included in the processor 160.

The one or plurality of processors 160 perform control to process input data according to predefined operation rules or an artificial intelligence model stored in the memory 150. The predefined operation rules or the artificial intelligence model are characterized in that they are made through learning.

Here, being made through learning means that predefined operation rules or an artificial intelligence model having desired characteristics are made by applying a learning algorithm to a plurality of learning data. Such learning may be performed in a device itself wherein artificial intelligence is performed according to the disclosure, or performed through a separate server/system.

An artificial intelligence model may consist of a plurality of neural network layers. At least one layer has at least one weight value, and performs an operation of the layer through the operation result of the previous layer and at least one defined operation. As examples of a neural network, there are a convolutional neural network (CNN), a deep neural network (DNN), a recurrent neural network (RNN), a restricted Boltzmann Machine (RBM), a deep belief network (DBN), a bidirectional recurrent deep neural network (BRDNN), deep Q-networks, and a transformer, but the neural network in the disclosure is not limited to the aforementioned examples excluding specified cases.

A learning algorithm is a method of training a specific subject device (e.g., a robot) by using a plurality of learning data and thereby making the specific subject device make a decision or make prediction by itself. As examples of learning algorithms, there are supervised learning, unsupervised learning, semi-supervised learning, or reinforcement learning, but learning algorithms in the disclosure are not limited to the aforementioned examples excluding specified cases.

A storage medium that is readable by machines may be provided in the form of a non-transitory storage medium. Here, the term 'non-transitory' only means that the device is a tangible device, and does not include a signal (e.g.: an electromagnetic wave), and the term does not distinguish a case wherein data is stored semi-permanently in a storage medium and a case wherein data is stored temporarily. For example, 'a non-transitory storage medium' may include a buffer wherein data is temporarily stored.

According to an embodiment, methods according to the various embodiments disclosed herein may be provided while being included in a computer program product. A computer program product refers to a product, and it can be traded between a seller and a buyer. A computer program product can be distributed in the form of a storage medium that is readable by machines (e.g.: compact disc read only memory (CD-ROM)), or distributed directly on-line (e.g.: download or upload) through an application store (e.g.: Play Store^{™}), or between two user devices (e.g.: smartphones). In the case of on-line distribution, at least a portion of a computer program product (e.g.: a downloadable app) may be stored in a storage medium readable by machines such as the server of the manufacturer, the server of the application store, and the memory 150 of the relay server at least temporarily, or may be generated temporarily.

Also, each of the components (e.g.: a module or a program) according to the aforementioned various embodiments of the disclosure may consist of a singular object or a plurality of objects. In addition, among the aforementioned corresponding sub components, some sub components may be omitted, or other sub components may be further included in the various embodiments. Alternatively or additionally, some components (e.g.: a module or a program) may be integrated as an object, and perform functions that were performed by each of the components before integration identically or in a similar manner.

In addition, operations performed by a module, a program, or other components according to the various embodiments may be executed sequentially, in parallel, repetitively, or heuristically. Or, at least some of the operations may be executed in a different order or omitted, or other operations may be added.

Meanwhile, the term "a part" or "a module" used in the disclosure may include a unit implemented as hardware, software, or firmware, and may be interchangeably used with, for example, terms such as a logic, a logical block, a component, or circuitry, etc. In addition, "a part" or "a module" may be a component constituted as an integrated body or a minimum unit or a part thereof performing one or more functions. For example, a module may be constituted as an application-specific integrated circuit (ASIC).

Also, the various embodiments of the disclosure may be implemented as software including instructions stored in machine-readable storage media, which can be read by machines (e.g.: computers). The machines refer to devices that call instructions stored in a storage medium, and can operate according to the called instructions, and the devices may include an electronic device according to the aforementioned embodiments (e.g.: the electronic device 100).

In case an instruction is executed by the processor 160, the processor 160 may perform a function corresponding to the instruction by itself, or by using other components under its control. An instruction may include a code that is generated or executed by a compiler or an interpreter.

Also, while preferred embodiments of the disclosure have been shown and described, the disclosure is not limited to the aforementioned specific embodiments, and it is apparent that various modifications may be made by those having ordinary skill in the technical field to which the disclosure belongs, without departing from the gist of the disclosure as claimed by the appended claims. Further, it is intended that such modifications are not to be interpreted independently from the technical idea or prospect of the disclosure.

## Claims

1. An electronic device comprising:
a communicator;
a camera;
a projection part; and
a processor configured to:
receive, through the communicator, state information indicating an operation state of an external device,
obtain, from a memory, related information of the external device,
based on an image of the external device obtained through the camera, identify at least one area from among an area on a surface of the external device and an area around the external device,
based on the obtained related information of the external device, identify a projection area on which to project a screen related to the received state information among the at least one area, and
control the projection part to project the screen on the identified projection area.

2. The electronic device of claim 1,
wherein the processor is configured to:
based on the obtained related information and the received state information, identify the projection area among the at least one area, and
the obtained related information includes at least one of information for identification of the external device, information on a type of the external device, information on a surface of the external device, information on a major operation of the external device, or information on components included in the external device.

3. The electronic device of claim 2,
wherein the processor is configured to:
based on at least one of an amount of the received state information or an importance of the received state information, identify a threshold size for the identified projection area, and
based on a size of the surface of the external device being greater than or equal to the identified threshold size, identify the area on the surface of the external device as the identified projection area.

4. The electronic device of claim 3,
wherein the processor is configured to:
based on the size of the surface of the external device being smaller than the identified threshold size, and a display being included in the external device, identify an area adjacent to the display among the at least one area around the external device as the identified projection area, and
based on the size of the surface of the external device being smaller than the threshold size, and the display not being included in the external device, identify an area adjacent to a component of the external device performing the major operation among the at least one area around the external device as the identified projection area.

5. The electronic device of claim 2,
wherein the processor is configured to:
based on the obtained related information including the information on the components included in the external device, identify a component among the components included in the external device related to the received state information, and
control the projection part to project the screen on a location corresponding to the identified component in the identified projection area.

6. The electronic device of claim 2,
wherein the processor is configured to:
based on the received state information and the obtained related information, identify whether to project the screen through the projection part,
based on identifying that the screen will not be projected, control the communicator to transmit the received state information to a user terminal, and
based on identifying that the screen will be projected, obtain the image of the external device through the camera.

7. The electronic device of claim 6,
wherein the processor is configured to:
based on the received state information, identify whether to project the screen through the projection part according to whether an importance of the received state information corresponds to urgency.

8. The electronic device of claim 1, further comprising:
a driver,
wherein the processor is configured to:
control the driver and the projection part to project the screen on the identified projection area.

9. The electronic device of claim 8,
wherein the processor is configured to:
obtain an image for a user through the camera,
based on the obtained image for the user, obtain information on the user, and
based on the obtained information on the user, the obtained related information, and the received state information, identify the projection area among the at least one area, and
the obtained information on the user includes at least one of information on a location of the user, information on a direction in which a head of the user is facing, information on a distance between the user and the external device, or information on a life pattern of the user.

10. The electronic device of claim 9,
wherein the processor is configured to:
based on the direction in which the head of the user is facing being maintained during a predetermined time, identify an area corresponding to the direction in which the head is facing as the projection area,
identify whether the external device is in a state of performing a predetermined operation based on the received state information,
based on the external device being in a state of performing the predetermined operation, control the driver and the projection part to project the screen including information on a proceeding situation of the operation, and
based on the external device being in a state of not performing the operation, control the driver and the projection part to project the screen including information for controlling an operation of the external device.

11. The electronic device of claim 9,
wherein the processor is configured to:
based on identifying that the received state information is displayed on a plurality of screens on a basis of the received state information, control the driver and the projection part to project a first screen among the plurality of screens on the identified projection area, and
based on identifying that the user performed an operation corresponding to the projected first screen based on the obtained image for the user being obtained while the first screen among the plurality of screens is being projected, control the driver and the projection part to project a second screen subsequent to the first screen among the plurality of screens.

12. A method of controlling an electronic device including a communicator, a camera, and a projection part, the method comprising:
receiving, through the communicator, state information indicating an operation state of an external device;
obtaining, from a memory, related information of the external device;
based on an image of the external device obtained through the camera, identifying at least one area from among an area on a surface of the external device and an area around the external device;
based on the obtained related information of the external device, identifying a projection area on which to project a screen related to the received state information among the at least one area; and
projecting the screen on the identified projection area.

13. The method of claim 12,
wherein the identifying the projection area includes:
based on the obtained related information and the received state information, identifying the projection area among the at least one area, and
the obtained related information includes at least one of information for identification of the external device, information on a type of the external device, information on a surface of the external device, information on a major operation of the external device, or information on components included in the external device.

14. The method of claim 13,
wherein the identifying the projection area includes:
based on at least one of an amount of the received state information or an importance of the received state information, identifying a threshold size for the identified projection area; and
based on a size of the surface of the external device being greater than or equal to the identified threshold size, identifying the area on the surface of the external device as the projection area.

15. The method of claim 14,
wherein the identifying the projection area includes:
based on the size of the surface of the external device being smaller than the identified threshold size, and a display being included in the external device, identifying an area adjacent to the display among the at least one area around the external device as the identified projection area; and
based on the size of the surface of the external device being smaller than the threshold size, and the display not being included in the external device, identifying an area adjacent to a component of the external device performing the major operation among the at least one area around the external device as the identified projection area.
